# EUROPEAN PATENT SPECIFICATION

(11) **EP 3 519 246 B1**
(45) Date of publication and mention of the grant of the patent: **03.04.2024**
(21) Application number: 16917956.1
(22) Date of filing: 29.09.2016
(51) Int. Cl.: B60Q 1/52, B60Q 1/46

(54) **ENHANCED COMMUNICATION SYSTEM FOR VEHICLE HAZARD LIGHTS**
VERBESSERTES KOMMUNIKATIONSSYSTEM FÜR FAHRZEUGWARNLEUCHTEN
SYSTÈME DE COMMUNICATION AMÉLIORÉ POUR FEUX DE DÉTRESSE DE VÉHICULE

(43) Date of publication of application: 07.08.2019
(73) Proprietor: Ess-Help, Inc., Houston, TX 77009 (US)
(72) Inventor: TUCKER, Daniel, Anthony, Santee, CA 92071 (US); COBB, John, Zachariah, Seabrook, TX 77586 (US); TORKELSON, Jonathan, Tulsa, OK 74133 (US); KIMBERLIN, Denver, Coweta, OK 74429 (US); MAURYA, Devender, Nath, New Delhi 110076 (IN); VINYARD, Nicholas, Wesley, Plano, TX 75024 (US); SINGH, Gaurav, Noida Uttar Pradesh 201301 (IN); TUCKER, David, M., Katy, TX 74450 (US)
(74) Representative: Script IP Limited
(86) International application number: PCT/US2016/054489
(87) International publication number: WO 2018/063253

(56) References cited:
- US-A- 5 646 385
- US-A1- 2002 036 908
- US-A1- 2009 219 150
- US-A1- 2010 225 465
- US-A1- 2015 116 133
- US-A1- 2016 144 778
- US-B1- 6 181 243
- US-B1- 6 420 799
- US-B2- 6 515 584
- US-B2- 7 150 554

## Description

### FIELD OF THE INVENTION

The present invention relates to emergency or hazard lights for automobiles, RVs, trailers, motorcycles and vehicles in general, and, more particularly, to emergency or hazard lights that strobe and give visual direction for increased safety and visibility.

### BACKGROUND

The advent of light emitting diode (LED) technologies has enhanced lighting capabilities to a point where vehicle based lights are becoming more effective as visual signals during emergencies and hazardous situations. Emergency services, law enforcement agencies, traffic control, and other government agencies have recognized this fact and added separate strobe lighting systems to their vehicles. These systems are added on to what would otherwise be a factory stock lighting setup and operate using a wiring and switch platform that is independent from the traditional hazard light circuit. Foreign and domestic auto manufacturers often use blinker switches based on decades-old technology in order to make automobile blinkers and hazard emergency lights blink or flash. Even where newer microcontrollers are used, they effect only the well-known signal and hazard flasher operations of decades past.

A problem with existing systems and modes of operation with respect to emergency flashers is that a double blinker flashing during an emergency, on a roadside for example, is insufficiently visible and does not provide a high level of clear visual communication to other drivers that a safety hazard exists. Many citizens are killed each year while using their flashing hazard lights during emergency situations on the road. Flashing or double blinking emergency lights are nowhere near as effective as strobing hazard lights.

Another problem with existing emergency flashers is that they are not always deployed when a genuine emergency exists. Occupants may be injured or otherwise unable to deploy the emergency flashers when they are needed most. A disabled vehicle on a roadway is a hazard to other vehicles and all vehicle occupants. In other cases, a vehicle may be off the roadway such that further collision danger is minimal. Nevertheless, hazard lights can be critical in quickly locating vehicles that have left the roadway either purposefully (e.g., to leave the flow of traffic) or as the result of an accident. Laws related to strobing lights on vehicles address emergency or law enforcement related vehicles. For example, there are laws for emergency and police vehicles reserving a combination of strobing colors on top of vehicles, or in a light bar, or mounted elsewhere. These laws reinforce the belief that strobing lights are significantly more effective during vehicle emergencies due to their higher visibility, attention grabbing attributes, and ability to provide useful visual information and direction to others.

With the increasing use of cell phones and text messaging (while operating a vehicle) becoming more of a safety problem, a need exists to enhance a citizen's emergency visual communication abilities when on the side of the road and without getting out of their vehicle. A need also exists for an automated visual emergency communication system to enhance a citizen's ability to automatically signal to others during emergency situations when the operator is unable to activate such a visual communication signal system on his or her own.

US2009/0219150 A1 discloses a system for implementing emergency strobing of existing vehicle turn lamps. In one embodiment, an operator selects whether a standard flash hazard signal or a high-visibility flash hazard signal occurs when the hazard switch is closed which drives existing vehicle turn lamps. In another embodiment, again only the existing vehicle turn lamps are activated with the auxiliary high visibility flash hazard signals. In another embodiment, again only the existing vehicle turn lamps are activated with the auxiliary high visibility flash hazard signals. In another embodiment, again only the existing vehicle turn lamps together with added supplementary flasher lamps are activated with the auxiliary high visibility flash hazard signals. US 7,150,554 B2 discloses dark-look LED automotive lighting. A centre, high-mounted stop lamp uses an array of LEDs surrounded by a dark bezel with a high gloss reflector shaped surface to be used in combination with a pair of rear combination lamps. US2010/0225465 A1 discloses an arrangement which retro-fits a third yellow LED array light above the lower two rear turn signal lights of a vehicle which simultaneously activates when the vehicle's four-way hazard and warning system is operated. US 6,181,243 B1 discloses an auxiliary auto signlight system. The auxiliary auto signlight system is added to the existing lights of the vehicle and activates in tandem with the operation of the existing vehicle lights.

What is needed is a system and method for addressing the above, and related, issues.

### SUMMARY OF THE INVENTION

The invention, in one aspect thereof, comprises a system for implementing emergency strobing of existing vehicle lights as claimed in claim 1.

The strobing circuit may control a plurality of existing vehicle hazard lights through the vehicle wiring harness to provide illumination of the existing vehicle hazard lights in the strobing pattern in response to the activation signal from the vehicle wiring harness that is indicative of hazard flasher deployment. In some embodiments, the strobing circuit accepts the activation signal, which would otherwise be input to the existing vehicle flasher module to activate a non-strobing hazard flasher deployment of the existing vehicle hazard lamps. In such case, the strobing circuit produces the electrical output to create the strobing pattern of the existing vehicle hazard lamps in place of what would otherwise be output by the existing vehicle flasher module to the existing vehicle hazard lamps producing the non-strobing hazard flashing of the existing vehicle lamps.

The strobing circuit may provide a plurality of different strobing effects, the plurality of strobing effects being selected by subsequent activation signals indicative of subsequent hazard flasher deployment. At least one of the plurality of strobing effects may indicate a directional signal by strobing existing vehicle lamps on one of the left or right side of the vehicle before those of the other side, with the multifunction output strobing therebetween. In some embodiments, the OR circuit connects to a high center mounted stop lamp as the auxiliary vehicle lamp. In other embodiments, the OR circuit connects to an output from a brake light circuit as the intercepted output.

### BRIEF DESCRIPTION OF THE SEVERAL VIEWS OF THE DRAWINGS

FIG. 1 illustrates an exemplary placement of signal indicators and hazard flashers on a typical vehicle.
FIG. 2A illustrates an exemplary vehicle dashboard and exemplary placement of certain controls.
FIG. 2B illustrates an exemplary vehicle wiring harness and location for a strobe module to replace a flash relay.
FIG. 3 is a block diagram of a strobe module for vehicle hazard lights according to aspects of the present disclosure.
FIG. 4 is a schematic diagram input/output diagram of a strobe module according to aspects of the present disclosure.
FIG. 5 is a wiring diagram of a two-pin flasher system.
FIG. 6A is a wiring diagram showing an embodiment of a strobe module according to aspects of the present disclosure installed into the generic two-pin flasher system of FIG. 5.
FIG. 6B is a wiring diagram showing an embodiment of a strobe module according to aspects of the present disclosure installed into the generic two-pin flasher system of FIG. 5 in a different manner.
FIG. 7 is a wiring diagram of a three-pin flasher system.
FIG. 8 is a wiring diagram showing an embodiment of a strobe module according to aspects of the present disclosure installed into the three-pin flasher system of FIG. 7.
FIG. 9 is a wiring diagram of a four-pin flasher system.
FIG. 10 is a wiring diagram showing an embodiment of a strobe module according to aspects of the present disclosure installed into the four-pin flasher system of FIG. 9.
FIG. 11 is a wiring diagram of a five-pin flasher system.
FIG. 12 is a wiring diagram showing an embodiment of a strobe module according to aspects of the present disclosure installed into the five-pin flasher system of FIG. 11.
FIG. 13 is a wiring diagram of an eight-pin flasher system.
FIG. 14 is a wiring diagram showing an embodiment of a strobe module according to aspects of the present disclosure installed into the eight-pin flasher system of FIG. 13.
FIG. 15 is a wiring diagram of a flasher system controlled by a body control module (BCM).
FIG. 16A is a wiring diagram showing an embodiment of a strobe module installed into the BCM controlled flasher system of FIG. 15.
FIG. 16B is a wiring diagram showing an embodiment of a strobe module installed into the BCM controlled flasher system of FIG. 15 via modification of a microcontroller.
FIG. 17 is a timing diagram showing on and off states for left and right signal lamps over time in a left to right signaling pattern.
FIG. 18 is a timing diagram showing on and off states for left and right signal lamps over time in a right to left signaling pattern.
FIG. 19 is a state diagram corresponding to one method of operating a strobe module according to aspects of the present disclosure.
FIG. 20 is a block diagram of a strobe module according to an embodiment of the present invention.
FIG. 21 is a schematic input/output diagram of the strobe module of FIG. 20.
FIG. 22 is a schematic diagram of an OR function implemented by a strobe module of an embodiment of the present invention.
FIG. 23 is a wiring diagram of a strobe module of an embodiment of the present invention installed into a five-pin flasher system and additionally controlling a high center mounted stop lamp.
FIG. 24 is a wiring and schematic diagram illustrating further implementation options for a strobe module of an embodiment of the present invention installed into a five-pin flasher system and additionally controlling a high center mounted stop lamp.
FIG. 25 is another wiring and schematic diagram illustrating further implementation options for a strobe module of an embodiment of the present invention installed into a five-pin flasher system and additionally controlling a high center mounted stop lamp.
FIG. 26A is a wiring diagram illustrating a strobe module of the an embodiment of the present invention controlling a high center mounted stop lamp and installed with a BCM flasher system.
FIG. 26B is a wiring diagram showing an embodiment of a strobe module having multifunction light control capabilities installed into a BCM controlled flasher system via modification of a microcontroller.

### DETAILED DESCRIPTION

In various embodiments, devices and systems are implemented that provide enhanced visual communication cues via existing or replacement signal and/or hazard lights on an automobile. Signal and hazard lights in most cars cycle between light and dark at a rate between once and twice per second or 1 - 2 Hz. Such a rate is believed to be adequate for signaling lane changes and other non-emergency situations. However, existing cars and hazard light flasher systems do not take in to account the need for, and benefit of, communicating an emergency situation utilizing an enhanced flash rate. A vehicle traveling 70 miles per hour will travel over 50 feet before a 2 Hz cycle has completed one time. This distance can mean the difference between an accident and a close call. Further, reaction time and ability to maneuver or stop must be taken into account. The quicker a driver takes notice of a problem, the more likely he or she can still have time to avoid a serious accident.

For purposes of the present disclosure, an enhanced flash rate is one that is perceptibly altered, or has at least a component of the flashing cycle that is increased in flashing speed, from the high end of the normal flash rate of about 2 Hz. Such flash rate may be referred to as a "strobe" instead of a flash or signal for purposes of the present disclosure. In some embodiments, a strobe has a cycle rate of 3 Hz or above (although slower rates may still be considered "enhanced" or "strobing" so long as there is a perceptible increase in rate over that of a typical signal light). In other embodiments, the strobe rate is 4 Hz or above, representing a doubling of the fastest typical vehicle signal light or hazard light flash rate. It is believed that the faster a light strobes with adequate delineation and contrast between light and dark periods, the more attention grabbing the light is perceived to be. Accordingly, in another embodiment, the strobe rate is 6 Hz, or a factor of three faster than the fastest flash rate expected to be encountered from a standard signal or hazard light. In further embodiments, the strobe rate is 8 Hz or above.

It should be understood that lighting patterns may be produced that comprise strobed illumination (e.g., light and dark cycles repeating at 2 Hz or more) interspersed with longer dark or non-illuminated periods. For purposes of the present disclosure, the term strobe encompasses patterns of flashing lights, part of which are strobing per the definition above, and part of which may be dark or non-illuminated, steady state illuminated (at full or partial maximum output), or flashed at a rate that is slower than a strobe. The term strobe should also be understood to encompass patterns that contain strobing portions of varying frequency. A non-limiting example of such a pattern would start flashing at 2 Hz and increase over time to 8 Hz or more before repeating or moving to another pattern. It should also be understood that, in various embodiments of the present disclosure, signal lights (e.g., left and right signal) are maintained at the normal 1-2 Hz, while emergency or hazard flashers are deployed at a strobing rate or in a strobing pattern. Moreover, as described in detail below, a normal slower flash rate may be optionally available when the hazard flashers are deployed.

Emergency vehicles have been quipped for many years with brightly and rapidly cycling lighting systems. These have been based on complex mechanical systems involving rotating reflectors and the like that increase apparent flash rate beyond what is normally achievable with traditional incandescent based circuitry. Unfortunately, such systems were specialized add on equipment to the basic underlying vehicle, and not normally available or cost effective for the general public to utilize, even for legitimate purposes. Newer systems based on light emitting diodes (LEDs) are available but, again, are specialized equipment, typically added to a vehicle after it leaves the manufacturer, and requiring separate controls, circuitry, and possibly power supplies from what is available from a factory vehicle.

A traditional signal light system for a consumer automobile, and its associated hazard flashing system, has a flash rate on the order of 1-2 Hz. This was originally based in part on the use of incandescent light bulbs in the older systems (typically 6V or 12V bulbs), which rely on internal filaments that heat up and glow in order to operate. The filaments do not glow sufficiently to be able to provide appropriate visual cues until power has been applied a sufficient amount of time. Further, they do not stop glowing instantaneously when power is removed. Thus, the rate at which the signal light or hazard flashers could be cycled was limited. Other limitations existed based on the fact that the original circuitry driving the flashing operation was based on analog thermal switches or other electromechanical components, which could not drive incandescent bulbs much beyond around 2 Hz. For purposes of the present disclosure, an existing vehicle circuit implementing the periodic activation of lights for signaling or hazard indications (whether based on thermal switches or otherwise) is referred to as a flasher module or relay, signal module or relay, or blinker module or relay.

Strobe lights based on exclusively on analog circuitry have been available for some time but require arrangements of transformers to produce voltages on the order of hundreds of volts, capacitors, and delicate gas discharge tubes to operate. Again, none are suitable for consumer use with ordinary automobiles.

LED lighting systems have now made their way to many vehicle models as standard equipment. LED upgrade kits are available for older and newer model cars as well. However, the operation of the LED lighting systems operate in the same manner and provide the same functions that were available with the incandescent lighting systems (albeit at greater efficiency and/or intensity).

In various embodiments, the present disclosure provides systems and methods that are capable of providing strobing effects in existing lighting systems for factory standard automobiles. Such systems and methods rely on existing wiring, LED lights, and controls (switches, etc.). In other embodiments, the systems and methods of the present disclosure are applicable to vehicles produced without LED lights, but which have been upgraded from the basic incandescent bulbs, at least so far lights for which strobing effects are sought. The existing wiring may be employed in such embodiments and the existing controls are utilized. In other words, embodiments of the present disclosure provide for strobing effects of vehicle signal lights, brake lights, or other existing lights to be available to a driver or vehicle occupant and to be operable with existing and familiar hazard light switches or other activation means. Automatic deployment of strobing effects can be tied to signals received from existing vehicle control or safety systems corresponding, for example, to air bag deployment, ABS activation, hard braking, rollovers, etc. It is also possible to add at least some automatic deployment features for older vehicles based on the use of separate accelerometers not present in the existing vehicle systems. Various embodiments of the present disclosure can be installed or implemented at the time of manufacture as factory standard equipment, or entirely as an aftermarket system relying on factory installed controls, wiring, and to the extent possible, existing bulbs.

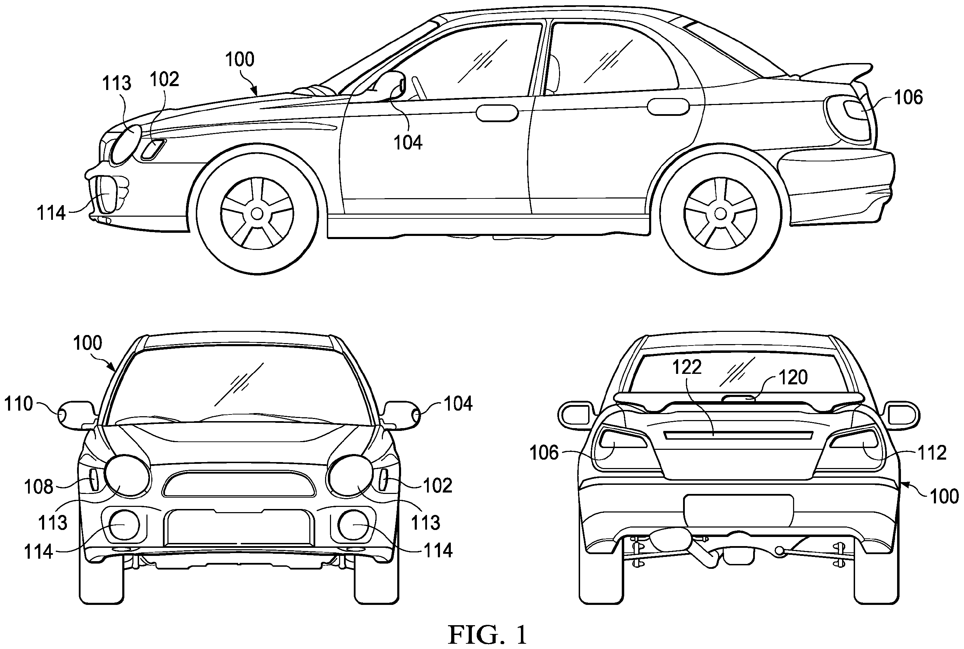

Referring now to Figure 1, exemplary placement of various signal lights and/or hazard lights is shown on a typical automobile **100.** It should be understood that the terms automobile, car, and vehicle, are used interchangeable herein, and the systems and methods of the present disclosure are equally applicable to all of these. The terms, lamp, light, indicator, flasher, signal and blinker as used in the present disclosure in the context of the strobing systems presented herein should be understood to mean an LED light placed appropriately on a vehicle or automobile **100** to be visible to other drivers or observers outside the vehicle. Figure 1 shows the automobile **100** from side, front, and rear views. A left front indicator light **102,** left side indicator light **104,** and left rear indicator light **106** can be seen at typical locations on the automobile **100.** Similarly, along the right side of the automobile **100** are right front indicator light **108,** right side indicator light **110,** and right rear indicator light **112.** It should be understood that the placement of the indicator lights is for illustration only, and the present disclosure is not limited to the placement shown. On most, if not all, available vehicles, the left front indicator light **102** and right front indicator light **108** will generally be toward the front of the automobile **100,** visible to facing or oncoming traffic. These are generally forward of left side indicator light **104** and right side indicator light **110** (if the vehicle is so equipped) which are visible from the sides of the automobile **100.** The left side indicator light **104** and/or right side indicator light **110** may also be mounted on the body of automobile **100,** rather than on the mirrors, or on another location. Finally, left rear indicator light **106** and right front indicator light **108** are generally mounted rearward on the **100** so as to be visible to traffic behind the automobile **100.**

In addition to the vehicle lights that are normally deployed as part of the signal light or hazard flasher system, vehicles typically have additional lights that are dedicated to other purposes. For example, headlights **112** are provided as standard equipment. Fog lights **114** may be standard, optional, or aftermarket. Brake lights are standard equipment as well. Rear brake lights on some vehicles serve a dual purpose and function as part of the existing signal or hazard flasher system. Vehicles of recent years provide a high center mounted stop lamp (HCMSL) **120** that functions along with the other brake lights. The HCMSL **120** is not normally shared with any other vehicle function (except as provided herein). After market light bars or light strips **122** can be added to most any vehicle. Although, as explained below, certain embodiments of the present disclosure are intended to operate only through standard or factory installed vehicle lights, it should be understood that aftermarket or add-on lights can be controlled as well. An aftermarket or add-on light should not be confused within the present disclosure for what are later referred to as auxiliary or multi-purpose lights. Auxiliary and/or multi-purpose lights, within the present disclosure, specifically denotes lights for which a use is already designated by the vehicle (e.g., an HCMSL) but which may be additionally or supplementally deployed or activated by systems of the present disclosure.

As described above, the various indicator lights, marker lights, or other vehicles lights may be LED lights or may have originally been incandescent bulbs (or a mixture of the two) that have been changed out for LED lights in order to allow effective strobing, as provided by various embodiments of the present disclosure. In various embodiments of the present disclosure, the existing location, placement, and color of lights is retained as the vehicle was manufactured, or would be manufactured, without any of the systems of the present disclosure.

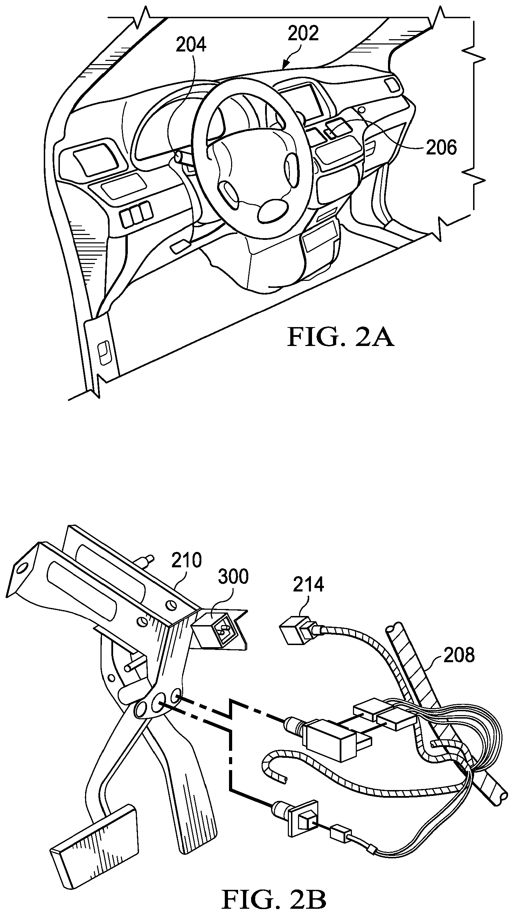

Referring now to Figure 2A, a vehicle dashboard **202** is shown. The dashboard **202** is meant to represent any vehicle dashboard as are widely known to the public. A turn signal stalk **204** is generally provided to the left of the steering wheel and operated to activate signal lights. Normally, movement of the turn signal stalk **204** downward indicates a left hand signal and movement of the turn signal stalk **204** upward indicates a right hand signal. Upon activation and the appropriate signal lights are illuminated in a slow, periodic flashing manner.

A hazard flasher button **206** may be located at various locations on the interior of a vehicle. Here, the hazard flasher button **206** is shown in the center of the vehicle dashboard **202** but it could be placed on a steering column, below the vehicle dashboard **202,** or elsewhere.

Embodiments of the present disclosure are designed to work with the exiting signal and hazard light controls (e.g., the turn signal stalk **204** and hazard flasher button **206)** such that a driver or user does not have to learn or remember any separate controls. As described below, some embodiments of the present disclosure allow a selection of various strobe or flashing lights to be implemented. These may be implemented by sequential presses of the hazard flasher button **206.** No separate manual controls are needed or provided. Thus, the user is not presented with a confusing array of options or controls during an emergency and does not have to suffer any unwanted modifications that are visible on the interior of the vehicle.

Referring now to Figure 2B, an exemplary vehicle wiring harness **208** and location for a strobe module to replace a flash relay is shown. The wiring harness **208** is shown as only that portion of the harness that interconnects with a strobe module **300** according to aspects of the present disclosure. It should be understood that the wiring harness may run throughout a vehicle and may be constructed of multiple separate pieces. According to embodiments of the present disclosure, a strobe module **300** replaces an existing flasher relay device and provides a strobing circuit for the hazard lights in an existing vehicle. The strobe module **300** may even be mounted in the same location as the original relay. In some embodiments, the strobe module **300** is pin-compatible with an existing connector **214** on the wiring harness **208** and performs all of the functionality described below relying on the power, signaling, and other connections provided via the wiring harness **208.** In other embodiments, an adapter (not shown) may interpose the strobe module **300** and the wiring harness connector **214** such that a single embodiment of a strobe module **300** can be connected to a wide variety of vehicles and wiring harnesses.

In some embodiments, as explained below, the strobe module **300** may not be able to provide the full contemplated functionality interfacing to the vehicle exclusively via the wiring harness **208.** In such cases, additional leads may be routed to power, ground, or wherever needed. In embodiments where a body control module (BCM) is present, the strobe module **300** may have little or no interaction to the vehicle via the connector **214,** but may be spliced and wired into the vehicle at a convenient location to receive output from the BCM and drive the associated vehicle lights (as described further below).

For purposes of the present disclosure, any electronic or electromechanical mechanical device with control or programmable control (whether or not reprogrammable) over the signal lights or hazard lights of a car is considered a BCM. A BCM may incorporate one or more silicon based processors, microprocessors, controllers, microcontrollers, chips, gate arrays, or other logical devices. In some cases, the BCM may contain relatively complex multifunctional components such as system-on-a-chip devices. Additional names or designators for a BCM may include, but are not limited to, computer, control unit, electronic control unit (ECU) body computer, body computer module, body controller, body control module, and on board controller. The BCM may or may not control additional aspects of the vehicle in addition to hazard or signal lights.

An existing mounting point **210** may be provided on the vehicle for physically locating and affixing the original flasher relay. The same location **210** may be used to store and secure the strobe module **300.** In embodiments where the strobe module **300** interfaces with the vehicle at least partially via the wiring harness **208,** the mounting point may be near the connector **214.**

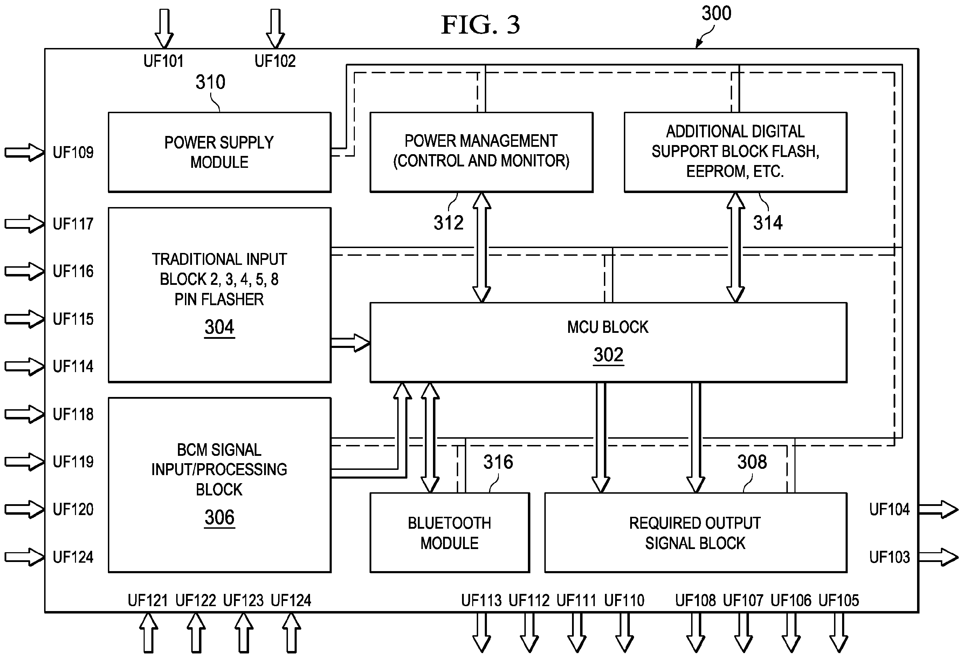

Referring now to Figure 3, a block diagram of a strobe module for vehicle hazard lights according to aspects of the present disclosure is disclosed. Arrows in Figure 3 are indicative of direction of signaling, information, or power flow. In the embodiment of Figure 3, the primary functionality of the strobe module **300** is provided by a microcontroller **302.** The microcontroller **302** may be a general purpose microcontroller that is suitable to the environment in which is it used (e.g., a vehicle interior or engine compartment). The microcontroller **302** may be programmed using, for example, assembly language or a higher level language when suitable. In some embodiments, the microcontroller **302** may be less advanced than a general purpose microcontroller and may comprise a field programmable gate array (FPGA) or the like. An application specific integrated circuit (ASICS) may also be used.

It will also be appreciated that a system-on-a-chip device might be employed to fulfill the functions of the microcontroller **302** as well as providing integrated memory and storage, I/O ports, D/A, A/D, timing functions, and the like. In some cases, wireless communication capabilities may even be provided on a single chip. Such an embodiment is within the scope of the present disclosure and simply moves certain aspects or functions of the strobe module **300** from the various individual components as described herein and consolidates them onto a single silicon device.

In the illustrated embodiment of Figure 3, the microcontroller **302** receives input from an analog input block **304.** The analog input block **304** provides signal connections to those automobiles relying on older or traditional analog blinker or hazard flasher modules. The analog input block **304** provides the appropriate leads and connections to mimic the interface to the automobile of various legacy flasher systems (e.g., via the connector **214).** These include, for example, existing 2, 3, 4, 5, or 8 pin flasher schemes. Exemplary detailed wiring diagrams for these systems are explained below. However, in each case, the functionality is similar. The strobe module **300** operates on the basis of the microcontroller **302** reading or accepting the signals or voltages that would normally be provided to the existing flasher module or relay and replicating the appropriate output signal or voltage at output signal block **308,** which connects to the downstream electrical components responsible for illuminating the relevant signal light (in many cases, the only existing downstream component will be the bulb or LED that is visible to other drivers). For example, a driver may flip a signal light stalk upward to signal a right turn. This would normally send a signal in the form of a voltage to the flasher relay. In response, the existing signal or hazard module would provide the traditional periodic illumination of the relevant signal lights. A driver may also deploy a hazard light switch, and in response, the existing hazard module would provide periodic illumination of all signal lights. The strobe module **300** replicates this functionality as a replacement for the existing hazard or signal module. However, in the event that hazard lights are activated (as indicated on the analog input block **304),** the microcontroller **302** is programmed to deploy the signal or hazard lights in a strobing fashion.

As described, a strobing light appears substantially different than a normal flashing light as have been seen to date on automobiles. However, since strobing lights are attention grabbing devices associated with hazardous conditions, it may be a better choice not to strobe the relevant lights when a simple signal light is indicated on the analog input block **304.** Accordingly, the microcontroller **302** may be programmed to flash, rather than strobe, the relevant lights or LEDs when a turn signal is indicated when such a distinction is supported by the existing vehicle wiring.

In some embodiment, the strobe module **300** is deployed or implemented in a newer automobile that may utilize a computer or set of computers that control non-engine related functions referred to as a body control module (BCM). In such cases, the signal stalk and the hazard flasher button may be connected directly to the BCM, which then deploys the signal lights as signal lights (one side only) or as hazard lights (both sides simultaneously). It is possible to implement the systems of the present disclosure by initial programming (or reprogramming where allowed) of the BCM. However, on vehicles that are already built and on the road, access to, and reprogramming of, the BCM is generally time consuming and cost prohibitive to a degree it may not be likely to gain wide acceptance. Further BCM schematics and programming routines are rarely made public. Accordingly, the strobe module **300** may have a BCM input block **306** instead of (or in addition to) the analog input block **304.**

The BCM input block **306** may comprise a series of leads that are wired to intercept the outputs from the existing BCM that drives the vehicle signal and hazard lights. When the microcontroller **302** detects that the BCM indicates a signal light, it may utilize the output signal block **308** to activate the relevant lights in the traditional signaling manner. On the other hand, if the microcontroller **302** detects on the BCM input block **306** that the BCM indicates a hazard flash, the output signal block **308** will be used to drive the strobing effect on the exterior lights as described.

The output signal block **308** provides electrical connections to each bulb or LED that forms an existing part of the signal or hazard flasher system of the automobile into which it is installed. Such connections may include connections to lights visible outside the car, as well as indicator lights visible to the driver. The microcontroller **302** may or may not have the capacity to directly drive the LEDs comprising the flasher or signal system of the car. Consequently, as is known in the art, amplifiers, relays, or other circuitry that is capable of driving the LEDs in the required manner may comprise the output signal block **308,** which, in turn, drives the LEDs.

A power supply module **310** may be integrated with the strobe module **300** to power the microcontroller **302,** output signal block **308,** and/or other components. The power supply module may be configured to draw power from the existing 12 volt system of the vehicle. In another embodiment, it may draw power from a regulated accessory bus (e.g., 5 V, 12 V, or other).

Power management circuitry **312** may be provided for converting voltage from that received by the power supply module **310** to that utilized by the other components of the strobe module **300.** The power management circuitry **312** may also prevent power surges or spikes from reaching the microcontroller **302** and other sensitive components. In some embodiments, battery back-up may be provided the microcontroller **302.** Where space and/or battery capacity permit, a backup battery could even drive the LEDs via the output signal block **308** when the vehicle electrical system becomes exhausted or fails due to damage sustained, for example, in a crash.

The microcontroller **302** may be configured to communicate with various existing vehicle subsystems for automatic deployment of strobing lights. For example, in the event of an air bag deployment, the emergency lights may be set to strobe. Similarly, if a deployment of an anti-lock brake system or stability system is detected, the microcontroller **302** may activate strobing lights. In some embodiments, deactivation of the strobing lights may be automatic as well based on information received from other vehicle subsystems.

In other embodiments, the strobe module **300** has one or more on-board (not presently shown) accelerometers that detect rapid acceleration (or deceleration), skids, overturns, and other non-typical driving maneuvers and can deploy strobing lights without input from the driver. The microcontroller **302** can be programmed such that the strobing ceases automatically upon resumption of a normal speed or orientation for the vehicle, or they may remain activated until the microcontroller **302** is reset (for example, by a press of the hazard light switch by the driver or occupant).

In some cases, it may be desirable to allow reprogramming of the microcontroller **302** after installation. Accordingly, the strobe module **300** may be equipped with a wireless module **316.** The wireless module **316** may be a Bluetooth module that can communicate in an ad hoc fashion with a variety of devices. The wireless module **316** could also be an IEEE 802.11 or "WiFi" enabled chip to take advantage of the WiFi network provided by some newer cars or mobile hotspots. The wireless module **316** can allow reprogramming of the microcontroller **302** even if the strobe module **300** is installed in a location in the vehicle that is difficult to access.

The wireless module **316** may also be used to interface with Bluetooth^{®} equipped LED modules installed in place of original incandescent LED signal or flasher lights. In such embodiments, the LED lights may behave as customary flashing signal or hazard lights unless instructed via the wireless module **316** to strobe. Naturally, such a solution requires additional circuity at each LED or bulb location and may be more cumbersome to install and maintain. However, such a configuration would have the advantage of allowing the existing signal and hazard light switch gear to remain in place. In such an embodiment, some or all of the output signal block **308** of the strobe module **300** may be eliminated and the wiring passing to the signal or hazard lights may simply be a pass-through arrangement. The input for the microcontroller **302** may then be gathered from the analog input block **304** and/or BCM input block **306.** A simple determination of which line or signal was active would be all that is needed in such an embodiment since the signal is passed "downstream" to the lights. The microcontroller **302** still determines whether to deploy a strobe or traditional flash based upon detection of whether a signal or hazard light was indicated. Further, in this and other embodiments, various capacities of the strobe module **300** might be turned on or off by a user via the wireless module **316.**

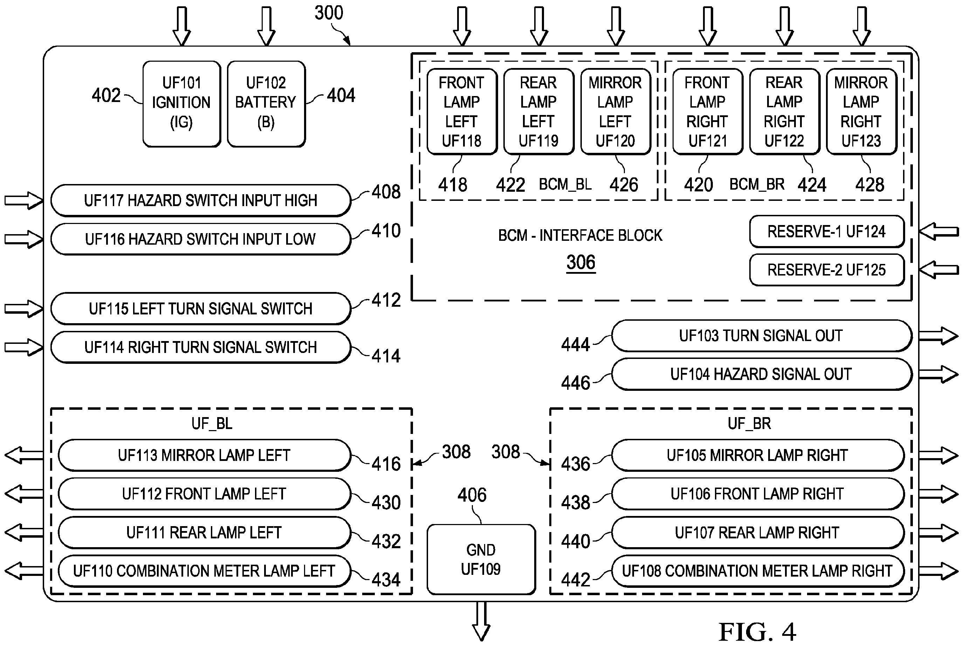

Referring now to Figure 4, a schematic input/output diagram of the strobe module **300** according to aspects of the present disclosure is shown. In Figure 4, arrows around the periphery of the strobe module **300** indicate whether the associated connection is an input or output. For example, inputs received from existing vehicle controls (e.g., hazard switch input high **408)** are shown with an inward facing arrow.

It will be appreciated that a number of existing vehicle signal and hazard light wiring schemes are in existence, whether on an analog basis or on the basis of utilizing a newer BCM. Accordingly, in order to work with a wide array of vehicles, various embodiments of the present disclosure may have different pinouts and wire compatibilities. In some embodiments, leads that are not used are simply ignored. However, where it is more economical to do so, various embodiments of the present disclosure may be built with only the ports, pins, and wiring needed for the immediate application for which it is intended. In such case, a fit-list might be developed alongside that specifies, for particular embodiments, those makes and models of vehicle with which it is compatible. After describing the inputs and outputs that are available, a number of examples are given below as to how various embodiments of the present disclosure are adapted to work with various wide spread wiring schemes currently in existence.

An ignition connection **402** may be provided as a part of the power supply module **310.** The **202** provides indication to the microcontroller **302** that the vehicle is switched on (normally, signal lights do not deploy when the vehicle ignition is off, but hazard lights do). A separate connection to power, battery connection **404** is also provided and allows for deployment of certain function (e.g., strobing hazard lights) when the ignition of off. The ignition connection **401** may also be part of the power supply module **310.** A ground lead **406** is also provided. In some embodiments, ground is provided via the connector **214,** but in other embodiments, it is a separately attached lead to the strobe module **300.**

Forming a part of the analog input block **304** may be leads or connections for hazard switch input high **408,** hazard switch input low **410,** left turn signal switch **412,** and right turn signal switch **414.** Two hazard switch input options are provided to account for the fact that in some existing systems the existing relay is activated by providing a high voltage to the relay. In others, the activation lead remains high unless the relay is to be deployed to flash the hazard lights. In such case, a ground or low voltage signal indicates hazard deployment. By providing both hazard switch input high **408** and hazard switch input low **410** leads, the strobe module **300** is compatible with both types of systems.

The strobe module **300** can be programmed to be capable of multiple flashing and strobing patterns. For example, a single press of the existing hazard switch might be intended to signal the traditional slow cycling flash. A second press would be intended to select a high speed strobe. Therefore, when various embodiments of the strobe module **300** are installed, a driver or passenger can deploy hazard lights in the manner in which they are accustomed. This also eliminates the need for separate switches or controls to gain full functionality of what is considered a vehicle safety system.

Hazard switches on certain vehicles provide two discrete positions (high and low). Typically, hazard flashers in such systems are deployed when the button is pressed and then remains depressed. Such switches actually activate the existing flasher relay by operating as a power switch. A second press releases the switch to the high position and depowers the hazard lights. The strobe module **300** may still be configured to operate with such systems, even so far as providing both flashing and strobing, or multiple strobing patterns. The strobe module **300** in such case may be programmed to "count" the number of presses, or transitions from on to off and vice versa provided via the legacy two-position switch. Relying on the battery connection **404** and/or the on board battery to keep the microcontroller **302** and other components powered the strobe module **300** provides the programmed or desired operations notwithstanding that the existing relay may have been powered only by the power flowing through the existing switch.

The lead for the left turn signal switch **412** and the right turn signal switch **414** act to inform the strobe module **300** when left or right turn signals are activated. As described above, the strobe module **300** may activate the left or right turn signals in response to movement of the existing turn signal stalk in a manner that replicates the existing slower flash of the turn signals, or a strobing flash.

In embodiments where the strobe module **300** interfaces with a BCM, the BCM input block **306** provides a front left lamp input **418** and a front right lamp input **420.** A rear left lamp input **422** and rear right lamp input **424** are also provided. If the vehicle is so equipped, a left mirror lamp input **426** and right mirror lamp input **428** may be provided as well. Since the BCM controls input or interface with the driver (e.g., via the turn signal stalk), the strobe module **300** may not receive any direct indication of the stalk position, nor of the position of the hazard light switch. Instead, the strobe module **300** may infer what the driver is doing based upon these inputs from the BCM. For example, if lights on one side or the other of the vehicle are activated based on the BCM inputs, the strobe module **300** simply replicates those outputs via the output signal block **308.** On the other hand, where lights for both sides of the vehicle are activated at once, the hazard lights have been deployed. The strobe module **300** will then use the output signal block **308** to effect a strobe on the vehicle's signal lamps.

For ease of understanding, in Figure 4, output signal block **308** is shown split into left and right components or left and right LED groups. Lights associated with the left side of the vehicle may be controlled by a left mirror lamp output **416,** a front left lamp output **430,** a rear left lamp output **432,** and/or a combination meter left output **434.** The output signal block **308** has a similar set of outputs for the right side of the vehicle including a right mirror lamp output **436,** a right front lamp output **438,** a rear right lamp output **440,** and/or a combination meter right output **442.** It is understood that not all of these outputs will be employed in every installation or in every embodiment of the strobe module **300.** For example, if a vehicle does not have a lamp associated with the left hand mirror, the left mirror lamp output **416** will be absent, or simply left unconnected. It is also understood that each of these outputs are equipped with whatever additional circuitry is needed to adequately drive the associated LEDs being activated.

The strobe module **300** also provides two additional signal outputs that are utilized with certain existing vehicle wiring systems as will be explained below. These include a turn signal out indicator **444** and a hazard signal out indicator **446.** The signals output on the turn signal out indicator **444** and hazard signal out indicator **446** are controlled by the microcontroller **302** as with the other outputs.

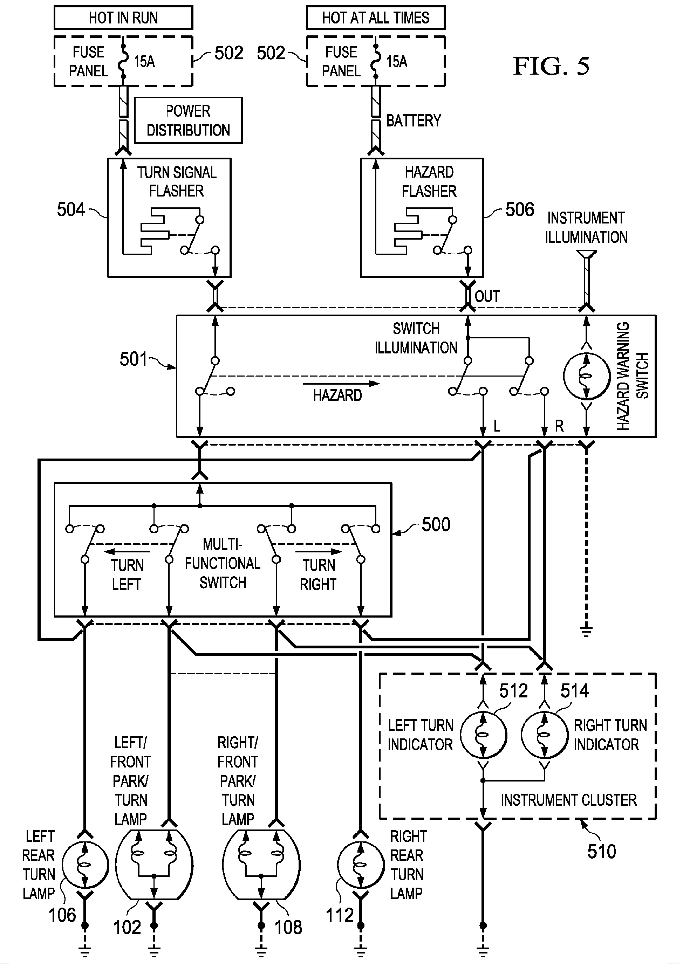

Referring now to Figure 5, a wiring diagram of a two-pin flasher system is shown. The system shown in Figure 5 is an existing two-pin flasher system and is denoted as such in the present disclosure by virtue of the fact that the existing hazard flasher **506** interacts with the remainder of the system via only two-pins as explained herein. In the present case, the two pins represent an input from power and an output to the light or lights to be flashed. It should also be understood that other configurations for two-pin flasher systems may also exist. The system of Figure 5 utilizes a pair of similar thermal cycling switches **504, 506** that control turn signals and hazard flashers, respectively. The turn signal flasher **504** may connect to power via fuse box **502** and be wired such that power is available only when the associated vehicle ignition switch is turned on. The hazard flasher **506** may be connected to fuse panel **502** such that power is continuously available to the hazard flasher **506.** Activation of the hazard flasher may be controlled by switch **501** which begins thermal cycling of the hazard flasher **506** providing power and illumination to left rear lamp **106,** left front indicator light **102,** right front indicator light **108,** and right rear indicator light **112.** An instrument cluster **510** may be provided with a left turn indicator **512** and a right turn indicator **514.** When the circuit has been placed under control of the hazard flasher **506** by the switch **501,** both of the turn indicators **512, 514** may flash periodically in unison. Where the turn signals are also utilized as hazard flashers, a multi-function switch **500** may be provided for turning on and off the turn signal flasher **504** as well as directing current to the appropriate lamps on the right or left side of the vehicle.

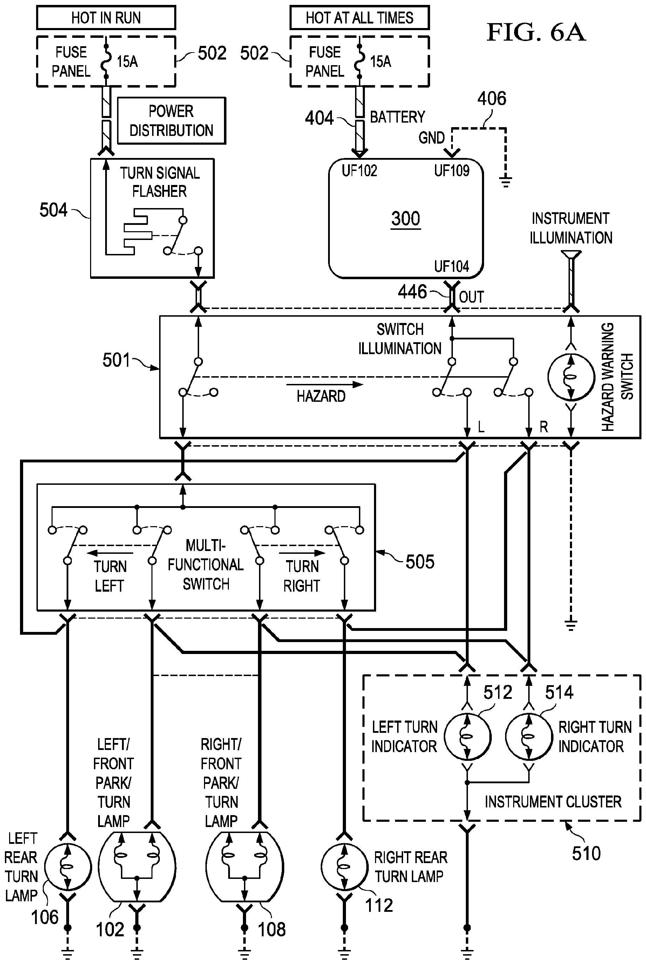

Referring now to Figure 6A, a wiring diagram showing an embodiment of a strobe module **300** according to aspects of the present disclosure installed into the two-pin flasher system of Figure 5 is shown. Here the existing thermal hazard flasher **506** has been replaced with the strobe module **300** of the present disclosure. As mentioned above, the strobe module **300** in the present embodiment interacts with the existing system via only two-pins. In the present embodiment, the additional the ground lead is utilized **406.** The remaining inputs and outputs of the strobe module **300** (e.g., described with respect to Figure 4) may be left unused or the strobe module **300** may be manufactured only with the inputs and outputs needed. In the configuration of Figure 6A, when the hazard switch **501** is activated, the strobe module **300** will drive the signal lamps at a strobing rate previously described. Thus, in the present configuration, the strobe module **300** stands in for the replaced hazard flasher **506.**

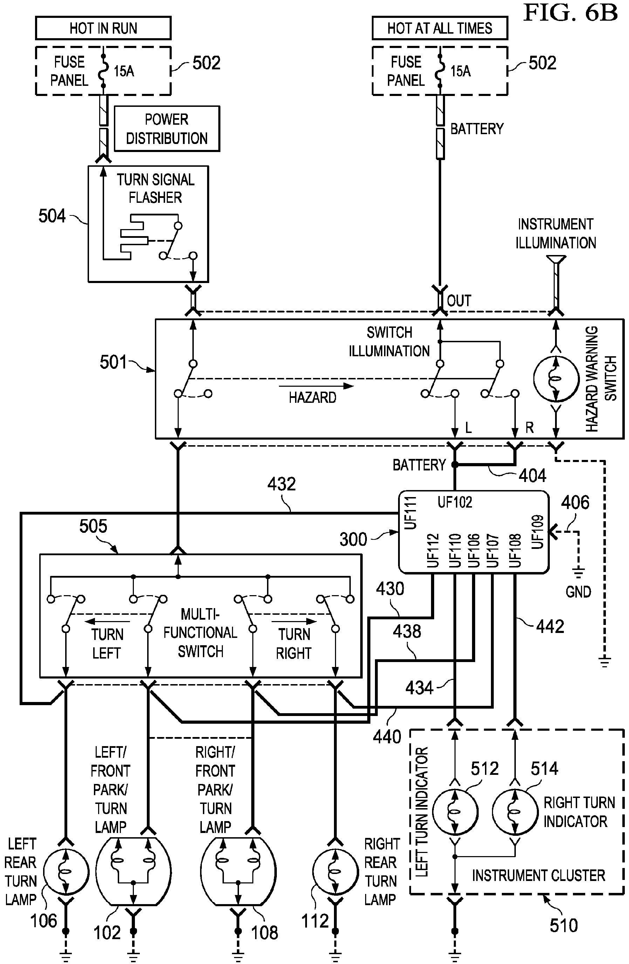

Referring now to Figure 6B, a wiring diagram showing an embodiment of the strobe module **300** installed differently into a two-pin flasher system is shown. One advantage of installing the strobe module **300** in the manner shown in Figure 6B is that the strobe module **300** is only connected to battery power when activated by the hazard switch **501.** This can prevent a potential drain on the vehicle battery that could result from the continuous operation of the internal microcontroller and other components of the strobe module **300.** Here, outputs from the switch **501** selectively connect the battery connection **404** of the strobe module **300** to the power. When the strobe module **300** in the present configuration is provided with power, the front left lamp output **430,** rear left lamp output **432,** front right lamp output **438,** and rear right lamp output **440** are utilized to drive the individual respective front and rear turn signals rather than driving all of them simultaneously via the hazard signal out indicator **446** (which is unused in the configuration of Figure 6B). Left meter output **434** may be utilized to drive the left turn indicator **512** and the right meter output **442** may be used to drive the right turn indicator **540.**

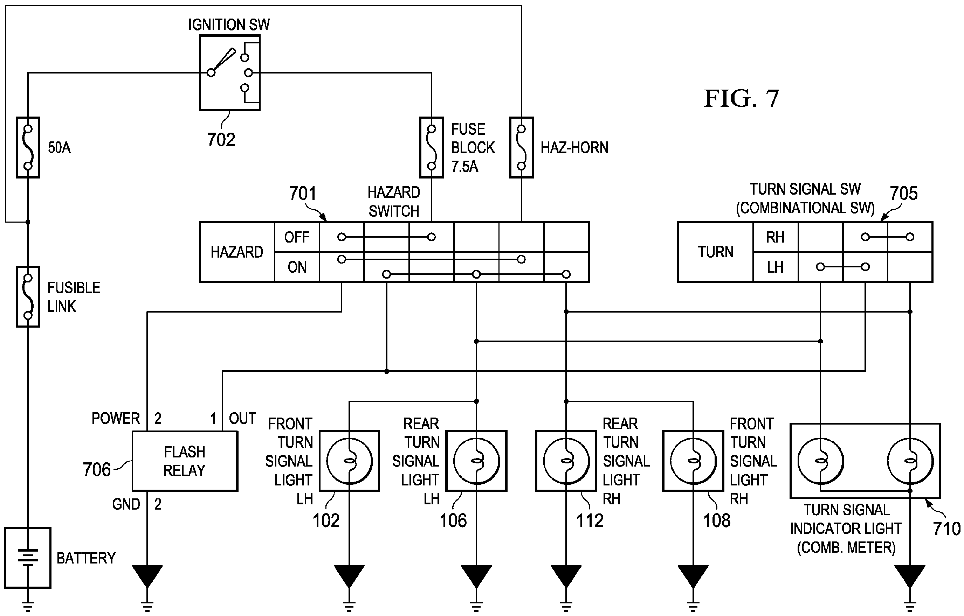

Referring now to Figure 7A, a wiring diagram of a three-pin flasher system is shown. It should be understood that the three-pin flasher system of Figure 7 is only an example and that other three-pin flasher systems may exist. In the three-pin flasher system, the existing flash relay **706** provides cycling power on an output based upon a setting of an ignition switch **702** and a hazard switch **701.** Three-pin flasher systems generally provide at least a front left turn signal **102,** a rear left signal **106,** a front right signal **108,** and a right rear signal **112.** A turn signal indicator **710** may also be provided. Under normal operation the turn signals are controlled by the turn signal switch **705** which may comprise a turn signal stalk next to a steering wheel. When power is on at the ignition switch **702,** the left or right side signal lights may be periodically activated via the flash relay **706.** The hazard switch **701** may be utilized to provide a cyclic flash via the flash relay **706** to all of the signal lights.

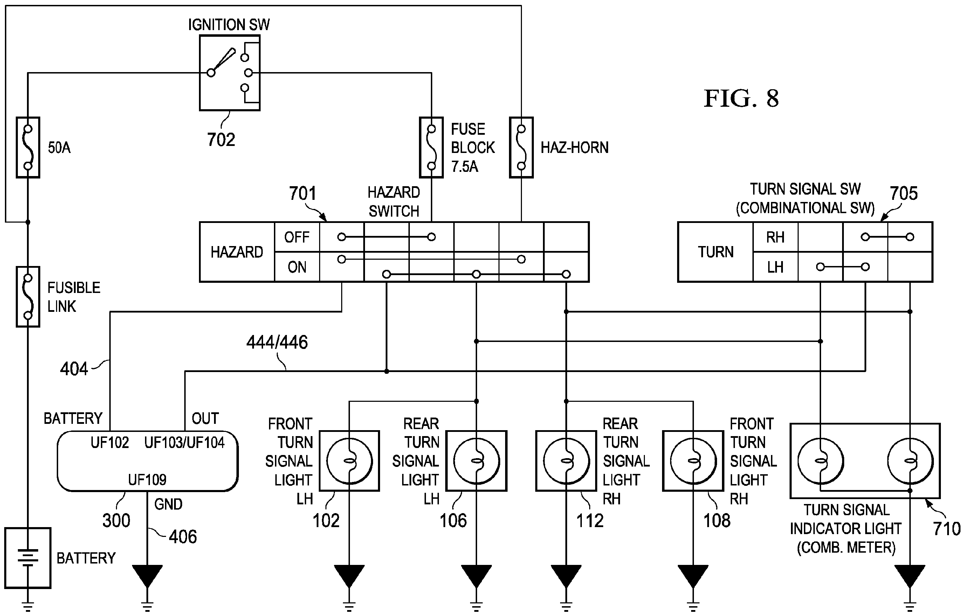

Referring now to Figure 8, a wiring diagram showing an embodiment of a strobe module **300** according to aspects of the present disclosure installed into the three-pin flasher system of Figure 7 is shown. Here, the flash relay **706** has been replaced by the strobe module **300** of the present disclosure. The battery lead **404** is connected to the hazard switch **701** and the signal out indicator **444** and the hazard signal out indicator **446** are connected both into the relay system of the hazard switch 701 and the turn signal switch **705.** This allows the strobe module **300** to serve as the provider of both strobing effects when the hazard switch **701** is activated as a signaling light provider when the turn signal switch **705** is activated.

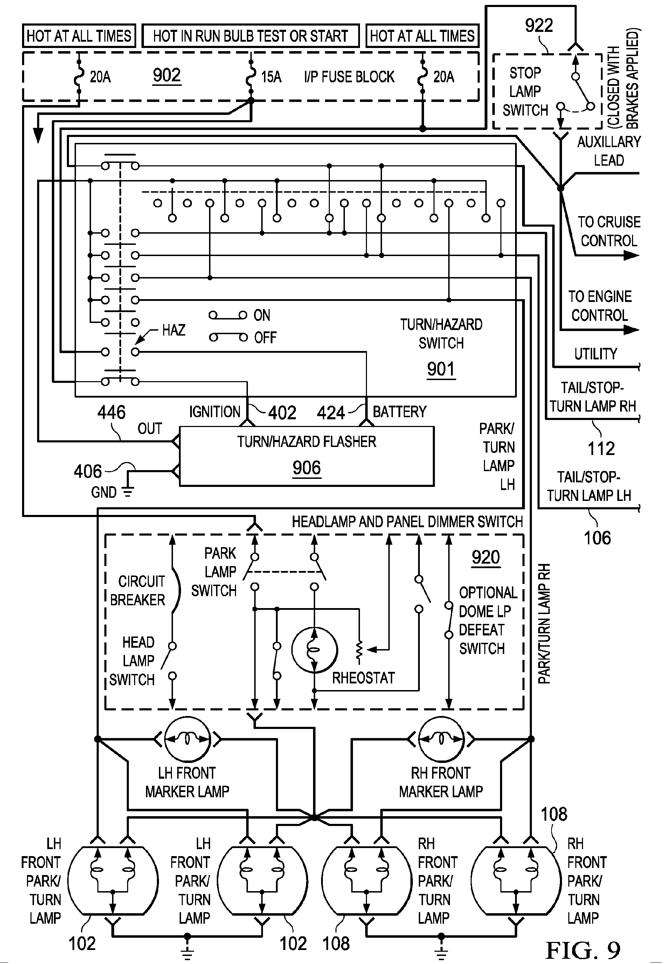

Referring now to Figure 9, a wiring diagram of a four-pin flasher system is shown. With the four-pin flasher system the existing flasher device **906** interacts with the remainder of the system via four separate pins. The system of Figure 9 is more complex than those previously discussed and a single switch **901** may be utilized to activate both signal lights and hazard lights. This may be powered via a fuse block **902** providing both full time power and intermittent power based on the position of the ignition switch. Some four-pin flasher systems utilize two left front turn signals or indicator lights **102** and two right front turn signals or indicator lights **108.** Single right rear turn signals **112** and left rear turn signals **106** are utilized. Each of these may be wired into the combination switch **901.** However, the flashing of the signal lights is controlled by the existing flasher **906.**

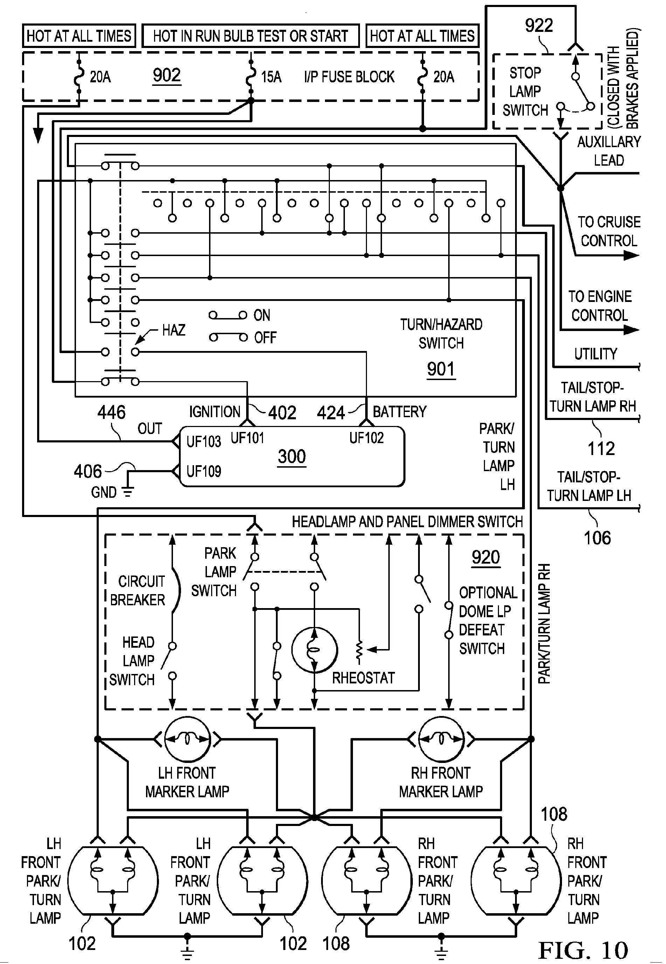

Referring now to Figure 10, a wiring diagram showing placement of the strobe module **300** of the present disclosure into the four-pin flasher system of Figure 9 is shown. Here, the strobe module **300** is connected via the combination switch **901** both on the ignition connection **402** and the battery connection **404.** Indication to activate hazard lights by the combination switch **901** activates both the battery connection **404** and the ignition connection **402** of the strobe module **300.** In turn, the strobe module 300 provides a strobing signal on hazard signal out indicator **446.** The hazard signal out indicator **446,** having been connected in place of the previous flash output, will cause the associated signal lights to be driven in the previously described strobing fashion.

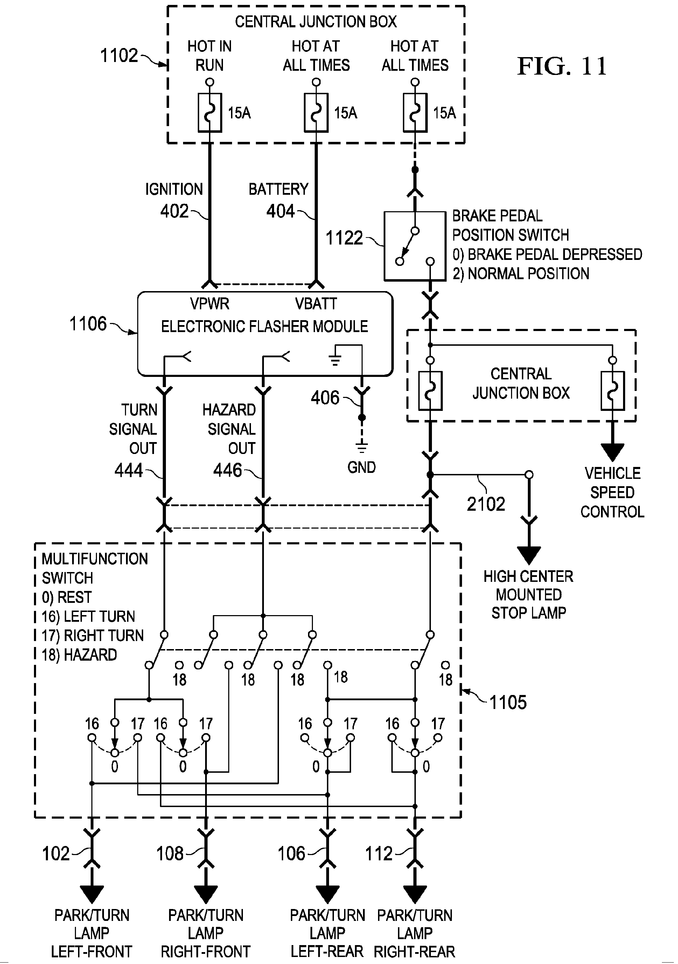

Referring now to Figure 11, a wiring diagram of a five-pin flasher system is shown. Five-pin flasher systems provide five-pin connections to an existing flasher module **1106.** As of previous embodiments a fuse box **1102** may be connected to the existing flasher module **1106** to provide power both when the ignition is on, as well as a full time connection. The existing flasher module **1106** controls the flashing of both the turn signals and the hazard flashers based on position information received from a multi-function switch **1105.** The multi-function switch **1105** provides selective power to some or all of the left front signal light **102,** the right front signal light **108,** the left rear signal light **106,** and the right rear signal light **112.**

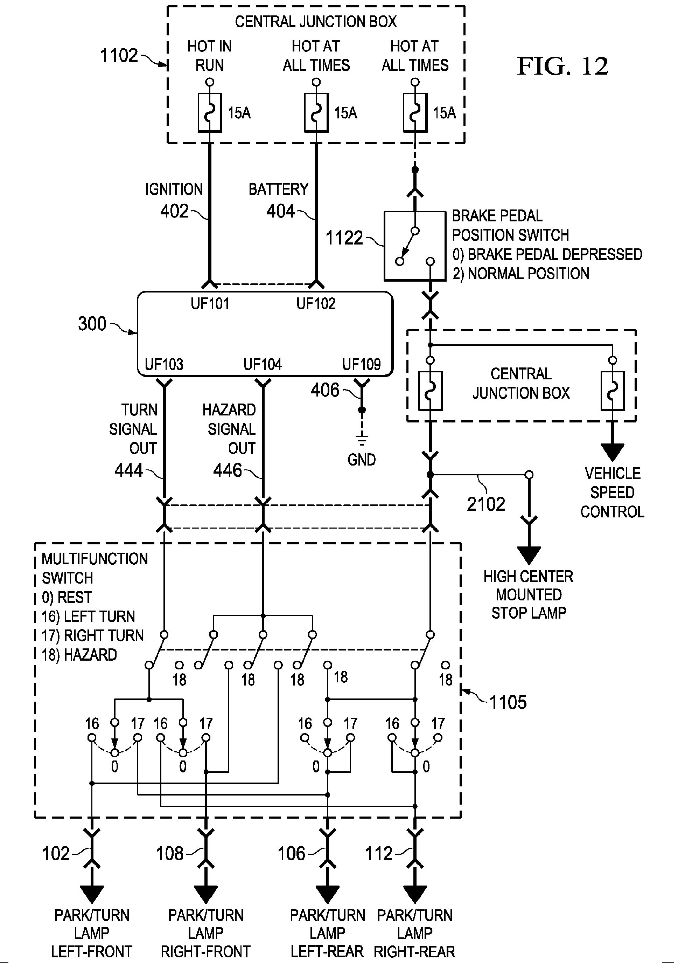

Referring now to Figure 12, the five-pin flasher system of Figure 11 is shown with the strobe module **300** of the present disclosure inserted therein. The strobe module **300** takes the place of the flasher module **1106** of the existing system. When the ignition connection **402** and the battery connection **404** are both powered, the strobe module **300** provides strobing outputs on the hazard signal output **446** and may provide a signal output on the turn signal output **444.** As before, the multi-function switch **1105** is wired to determine which of the signal lamps receive the respective signal from the strobe module **300.**

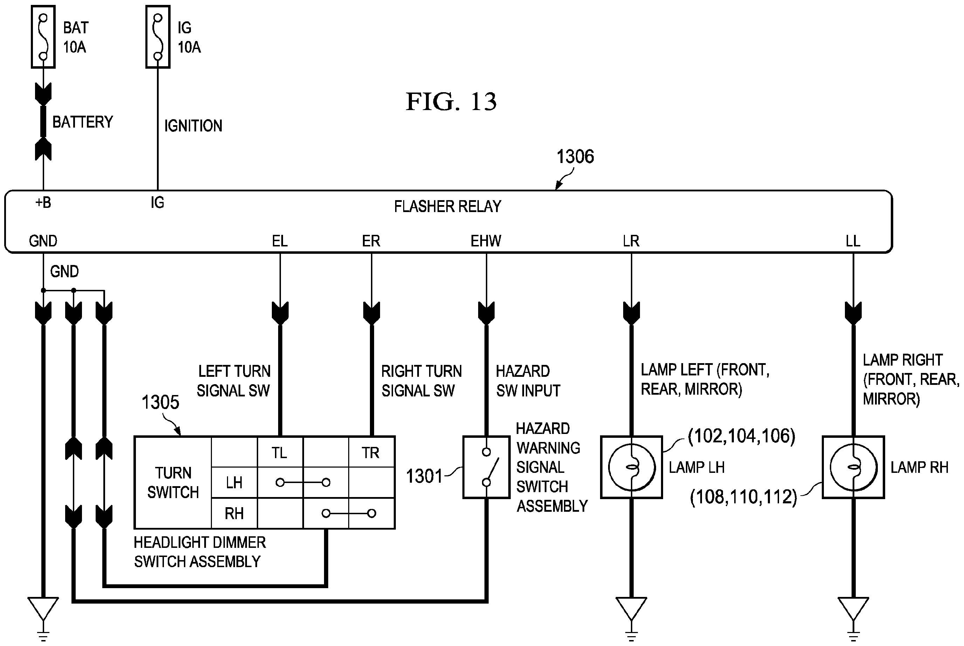

Referring now to Figure 13, a wiring diagram of an eight-pin flasher system is shown. The eight-pin flasher system of Figure 13 interacts with the existing flasher relay **1306** via eight separate pins. A turn switch **1305,** which may be associated with a steering column mounted stalk, signals to the existing flasher relay **1306** whether a left or right turn signal has been activated. The existing relay then provides the appropriate flashing output on either the left or right side signal lights. A separate hazard flasher switch **1301** indicates to the existing flasher relay **1306** when a hazard condition has been signaled in the flasher relay **1306** illuminates all of the signal lights in the traditional flashing manner.

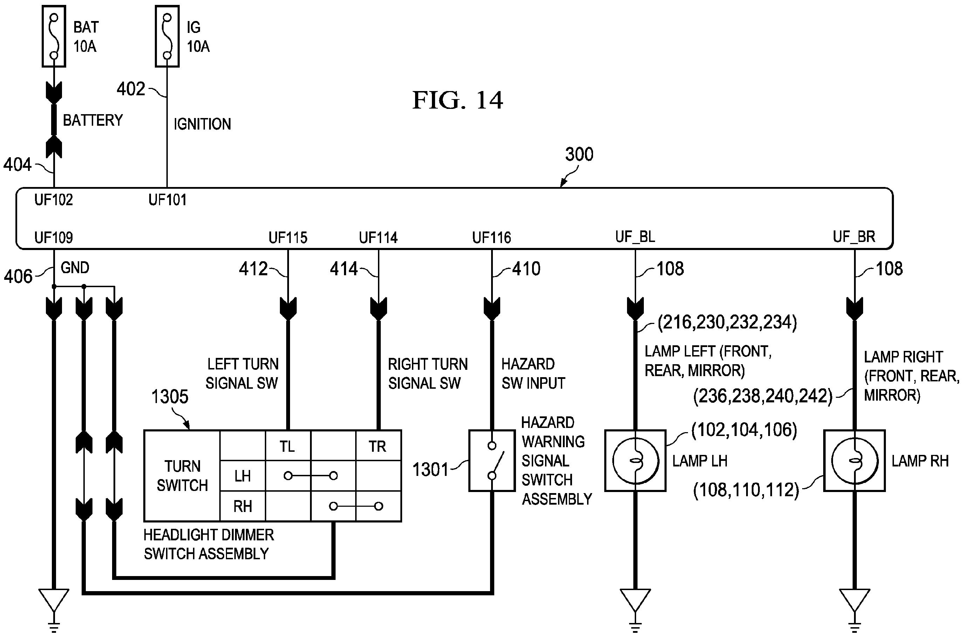

Referring now to Figure 14, a wiring diagram showing the eight-pin flasher system of Figure 13 equipped with a strobe module **300** according to aspects of the present disclosure is shown. Here, the strobe module **300** is connected to an ignition power switch via ignition connection **402** and is connected to the battery via battery connection **404.** The ground connection **406** is also utilized. Outputs from the existing turn signal switch **1305** are provided in the case of the left turn signal to the left turn signal switch input **412** and in the case of the right turn signal to the right turn signal input **414.** The separate hazard switch input low **410** is provided since the shown eight-pin flasher system activates the hazard flasher by grounding the pin. Based upon the signal received on inputs **412, 414, 410** the strobe module **300** acts either as a turn signal activating only the left or right side lights or acts as a flash module and provides a strobing output on all of the signal lights. These may include left side lamps **102, 104, 106** and right side lamps **108, 110, 112.** It will be appreciated that the strobe module **300** may have outputs dedicated to each of the individual lamp positions as previously described. These may each be used or only one may be used for each side of the vehicle.

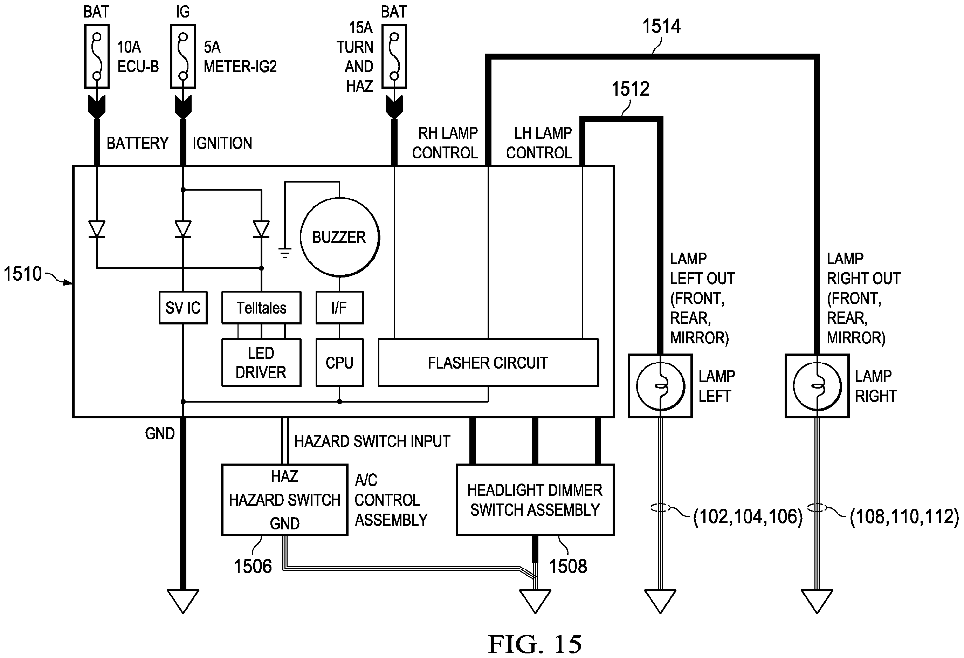

Referring now to Figure 15, a wiring diagram of a flasher system controlled by a BCM is shown. As previously described, BCM systems are not necessarily well documented. However, based on functions provided by various BCMs, certain internal components are known (for example, as shown, interior to BCM **1510).** Typically, a BCM will receive inputs both from a hazard switch **1506** as well as turn signal indicators. Left side outputs **1512** controls the left side lamps **102, 104, 106** and a right side output **1514** may control right side lamps **108, 110, 112.**

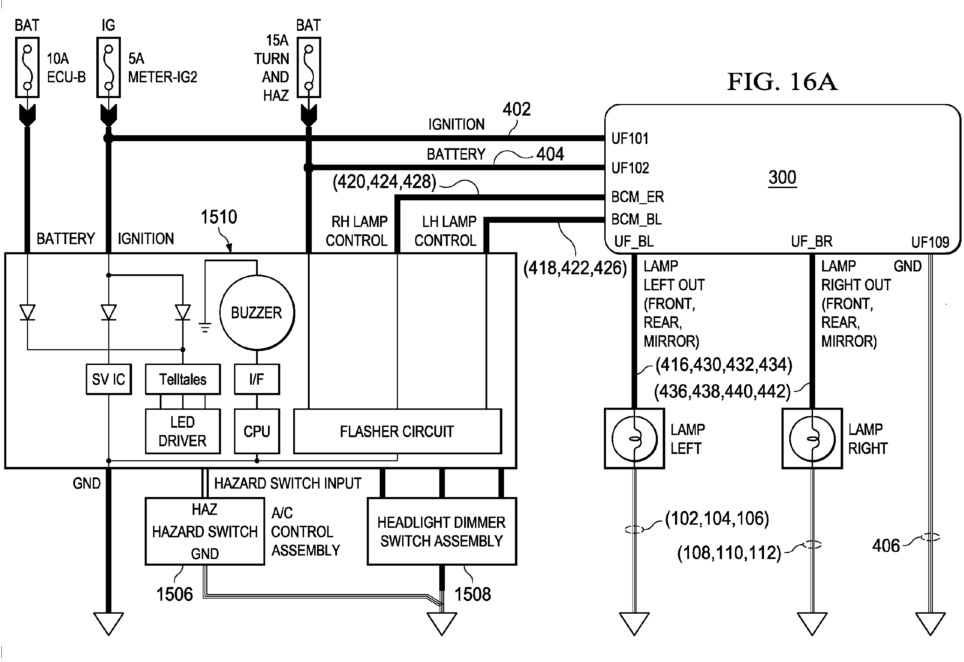

Referring now to Figure 16A, a wiring diagram showing the strobe module **300** of the present disclosure installed in a BCM system is shown. In the installation of Figure 16A, the strobe module **300** may be required to be separately connected to the ignition by the ignition connection **402** and to the battery by the battery connection **404.** The strobe module **300** then intercepts the output from the BCM **1510** to determine when signal lights or hazard lights have been activated. All or only part of the connections available on the BCM input block **306** may be utilized. These may include a front left lamp input **418,** a rear left lamp input **422,** a left mirror lamp input **426,** as well as the corresponding inputs on the right side of the vehicle such as the front right lamp input **414,** the rear right lamp input **422,** and the right mirror lamp input **428.** Similarly, depending upon the particular configuration all or perhaps only some of the lamp driving outputs of the strobe module **300** may be utilized. For example, regarding the left side of the vehicle, the left mirror lamp output **416,** the front left lamp output **430,** the rear left lamp output **432,** and/or the meter output **434** may be utilized. With regard to the right side of the vehicle, the right mirror lamp output **436,** the right front lamp output **438,** the right rear lamp output **440,** and/or the meter output **442** may be utilized. Lamps may include but are not limited to the left front lamp **102,** left mirror lamp **104,** and left rear lamp **106.** On the right side, the lamps may include but are not limited to the front right lamp **108,** the front mirror lamp **110,** and the right rear lamp **112.**

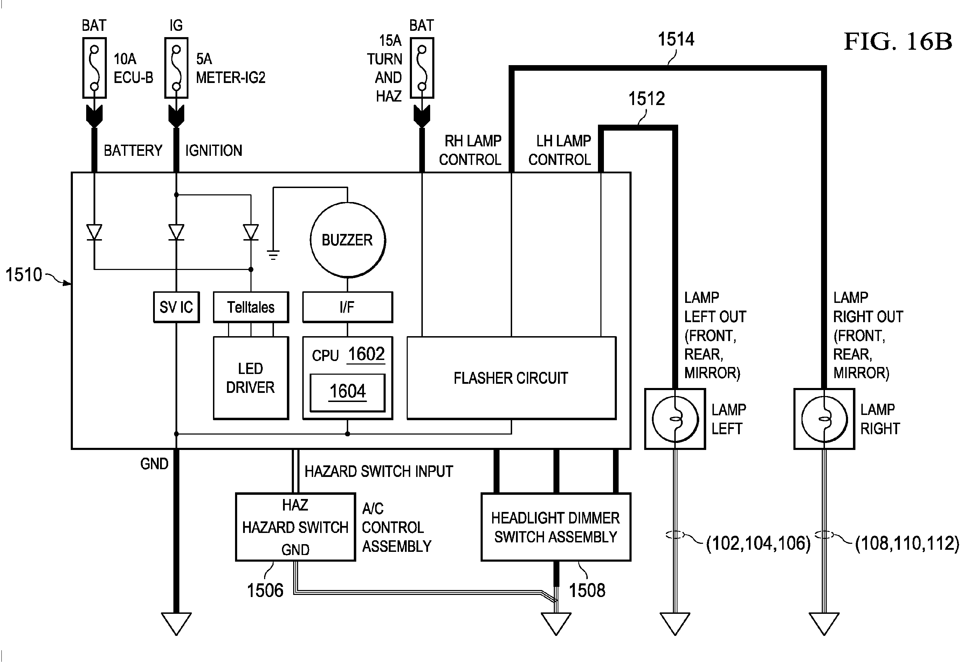

Referring now to Figure 16B is a wiring diagram showing an embodiment of a strobe module installed into the BCM controlled flasher system of Figure 15 via modification of a microcontroller. As previously described, and as known to those of skill in the art, the BCM **1510** may comprise one or more microcontrollers or central processing units **1602.** The CPU **1602** may execute the logic associated with the various functions of the BCM including, but not limited to, operation of the signal lights and hazard lights. Here, the BCM **1510** is configured to directly control the strobing functions of the hazard lights as described herein (in contrast to the system of Figure 16A where the strobing functions are implemented "downstream" of the BCM). This may be accomplished by an auxiliary chip **1604** that may contain memory and instructions for proper timing of the hazard lights (e.g., a strobe effect or effects). Such an auxiliary chip **1604** may be wired to the BCM **1510** or CPU **1602** directly or may communicate with the BCM **1510** or CPU **1602** via a bus (not shown) such as a controller area network (CAN) bus (many vehicles today are already equipped with a CAN bus). In another embodiment, additional chips or memories are not needed as the BCM **1510** contains all of the necessary logic and timing information to drive the vehicle lights in a strobing fashion in response to inputs from the hazard switch and/or signal stalk.

It should be understood that the various configurations described above and illustrated in Figures 5-16B employing various embodiments of strobe modules according to the present disclosure are illustrative only, and should not be taken as exhaustive. One of skill in the art can develop additional configurations employing the functions and abilities of various embodiments of strobe modules (e.g., strobe module **300)** described herein.

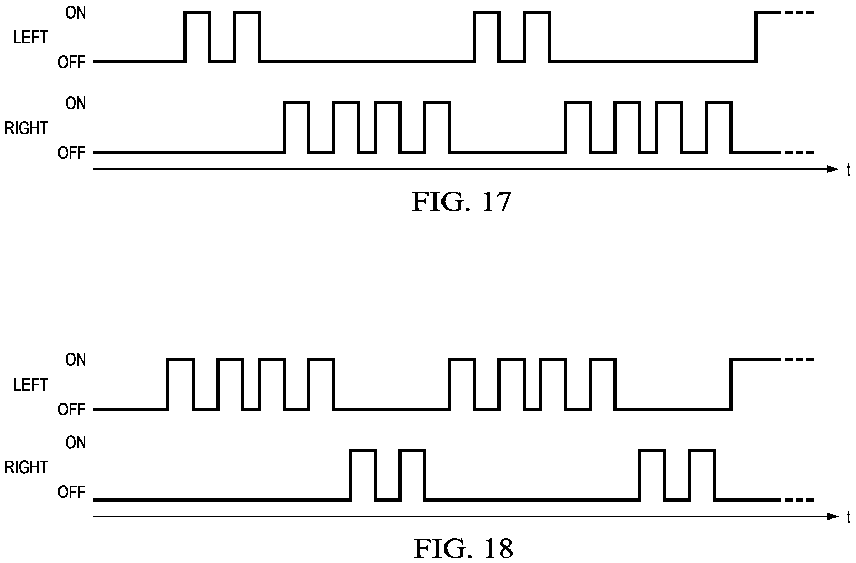

In operation, once installation is complete, and depending upon the existing vehicle circuitry and the limitations inherent therein, more than one strobe pattern may be accessed and activated by the driver or user. For example, upon an initial activation of the strobe module **300** in the context of deployment of a hazard switch, the strobe module **300** may be programmed to flash in the traditional manner (e.g., with a cycle of about 2 Hz). A second press of activation of the vehicle's hazard switch (e.g., hazard switch **206** of FIG. 2) may result in the strobe module switching from a slow cycle to a strobing cycle (e.g., around 8 Hz). Further options can be embedded or programmed into strobe module (e.g., using the microcontroller **102)** such as strobe pattern that moves from right to left or vice versa. One such pattern is illustrated in FIG. 17 where the left side lights strobe briefly and then cease while the right side lights strobe slightly longer before the cycle repeats. This is suggestive that traffic or other observers of the hazard lights should move to the right. A similar pattern can be developed to suggest movement to the left as shown in FIG. 18.

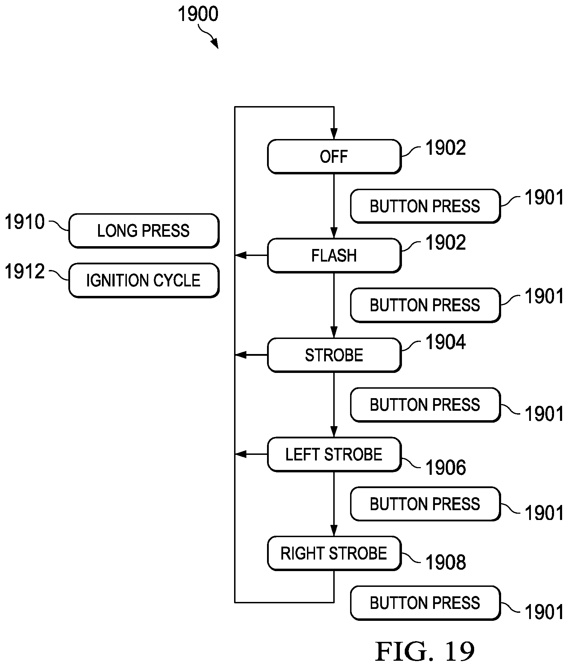

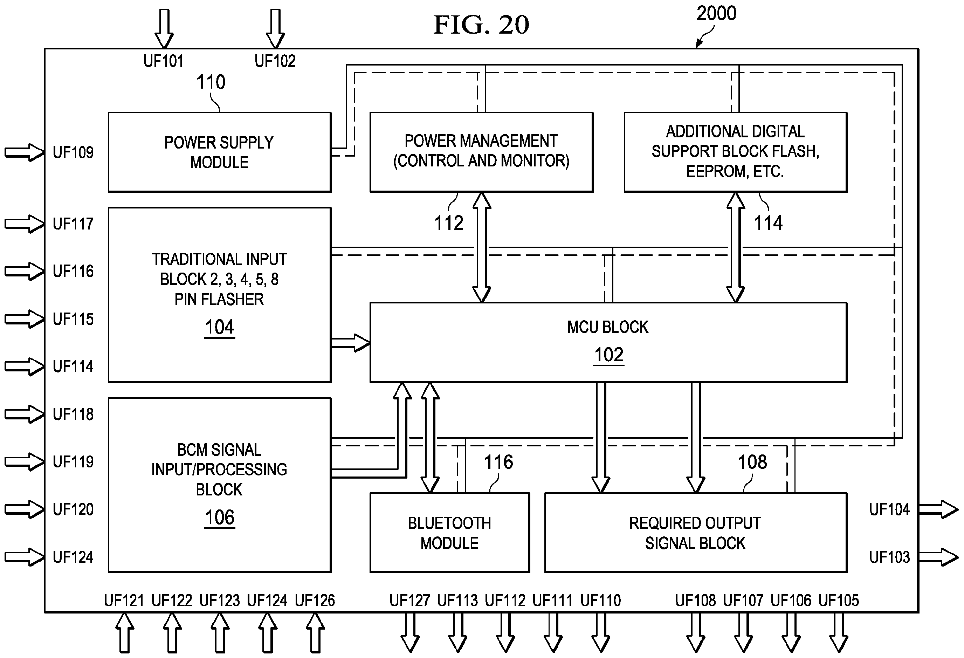

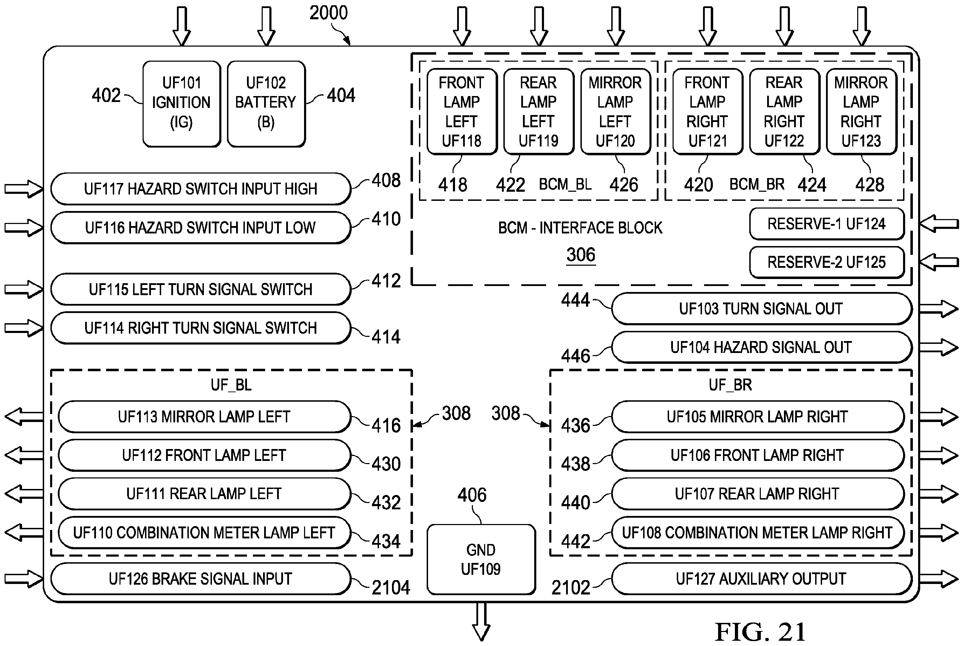

An exemplary state diagram corresponding to the operation of the strobe module **300** is shown in Figure 19. In some embodiments, continued presses of the hazard switch are needed to cycle the strobe module, as shown in FIG. 19. An off state is shown at **1902.** A single button press **1901** or switch throw (e.g., deployment of the hazard switch **206)** may move the strobe module **300** to a traditional flashing configuration **1902.** From here, another press **1901** moves the strobe module **300** to a strobe **1904.** In some embodiments, further presses **1901** move the module **300** to a right to left strobe **1906** and a left to right strobe **1908.** However, depending upon the switch gear available in the existing vehicle into which the strobe module **300** is installed, a single, long press **1910** of the hazard switch may be used to reset the strobe module to off **1902** from any other state. In another embodiment, cycling or interrupting the power supply to the strobe module through the ignition (e.g., ignition connection **402)** may be employed to "reset" the strobe module **300.** Referring now to Figure 20, a block diagram of a strobe module **2000** according to an embodiment of the present invention is shown. Referring also to Figure 21, a schematic input/output diagram of the strobe module **2000** is shown. The strobe module **2000** is substantially similar to the strobe module **300** previously described but has additional inputs and outputs as described herein. The strobe module **2000** has the ability to incorporate additional vehicle lighting that is not a part of usual signal light setup of the vehicle into which it is installed. The additional lighting may be lights that already have a function or use by the subject vehicle. For example, the additional lighting may include headlights, tail lights, fog lights, marker lights, brake lights, internal lights or others. Such lighting that already has a purpose or use on the vehicle may be referred to as multi-purpose lighting. In other words, the multi-purpose lighting has an existing use on the vehicle, but will gain an additional use by connection to the strobe module **2000,** namely, a strobing function. From the point of view of the strobe module **2000,** the multi-purpose lighting may be considered multi-purpose auxiliary lighting since it is not a part of the normal standard flasher system that is being augmented or replaced by the functionality provide by the strobe module **2000.**

As shown in Figure 21, the strobe module **2000** may provide an auxiliary light output **2102** that may be used to selectively illuminate or strobe one or more multi-purpose auxiliary lights. In some embodiments, more than one auxiliary light output may be provided. With all auxiliary light outputs, the function of the associated light (which may be one or multiple LEDs) may be to strobe when activated by the output **2102.** In this way, the multi-purpose light can be made to strobe along with the existing vehicle hazard flashers, thereby increasing the visibility and utility of the systems of the present disclosure. As previously described, the strobe module **300** is capable of strobing lights associate with one side of the vehicle or the other independently (e.g., to generate a left to right strobe or vice versa). The strobe module **2000** provides the same ability and it may associate the one or more auxiliary light outputs **2102** with either or both "banks" of strobing lights. In other words, the auxiliary light output **2102** may be activated when the left side outputs **416, 430, 432,** and/or **434** are activated, when right side outputs **436, 438, 440,** and/or **442** are activated, or when either left or right side outputs are activated. In some embodiments, the auxiliary light output **2102** may be activated alone, or independently of the left side outputs **416, 430, 432,** and/or **434** or right side outputs **436, 438, 440,** and/or **442.**

Although the auxiliary light output **2102** could be used to power a light having no additional purpose (e.g., a light or set of lights purposely installed only for strobing), the auxiliary light output **2102** is utilized in other embodiments to control or strobe a light that may already be configured to operate in an existing circuit. In one particular embodiment, the auxiliary light output **2102** may be used to activate a vehicle's existing high center mounted stop lamp (HCMSL). The existing HCMSL (or any other auxiliary light) could be disconnected from its original circuit and simply used as a part of the strobing systems of the present disclosure. However, it may be strongly preferred to not only provide strobing operations to the existing light, but also to retain its original function.

As one possible means for allowing consideration and integration of the existing function of the auxiliary multi-purpose light, the strobe module **2000** may provide an auxiliary light input **2104** that accepts input that would otherwise signal or power the associated auxiliary multi-purpose light. This input **2104** may be utilized to signal the strobe module **2000,** and specifically the microcontroller **302,** when the existing vehicle systems indicate that the auxiliary multi-purpose light should be activated or illuminated whether the strobe module **2000** is currently employing the associated auxiliary multi-purpose light in a strobing capacity or not.

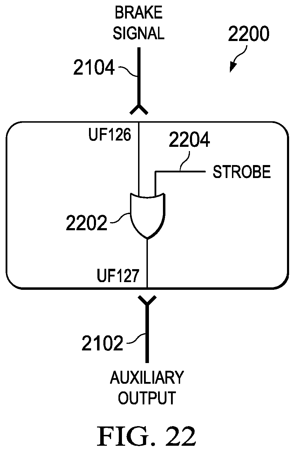

Referring now also to Figure 22, a schematic diagram of an OR function implemented by the strobe module **2000** of an embodiment of the present invention is shown. The function of the OR circuit **2200** is represented here logically by the OR gate **2202** (although as explained further below it may not be implemented by a digital gate but by mechanical relays, solid state relays, field effect transistors, bipolar junction transistors, or any other switching scheme that is appropriate for reliable operation of the system). In operation, the circuit **2200** accepts the auxiliary light input **2104** as one input to the OR gate **2202.** A second input to the OR gate is generated internally (e.g., by the microcontroller **302)** and becomes active when the strobe module **2000** operates to strobe whatever light or lights may be connected to the auxiliary light output **2102.**

The OR circuit **2200** may be implemented within the same physical packaging as the other components of the strobe module **2000,** or may be implemented externally. Again, the illustrated OR gate **2202** is only a logical representation. Physically, the OR gate **2202** and the functionality of the circuit **2200** may be implemented via mechanical relays, solid state relays, field effect transistors, bipolar junction transistors, or any other switching scheme that is appropriate for reliable operation of the system.

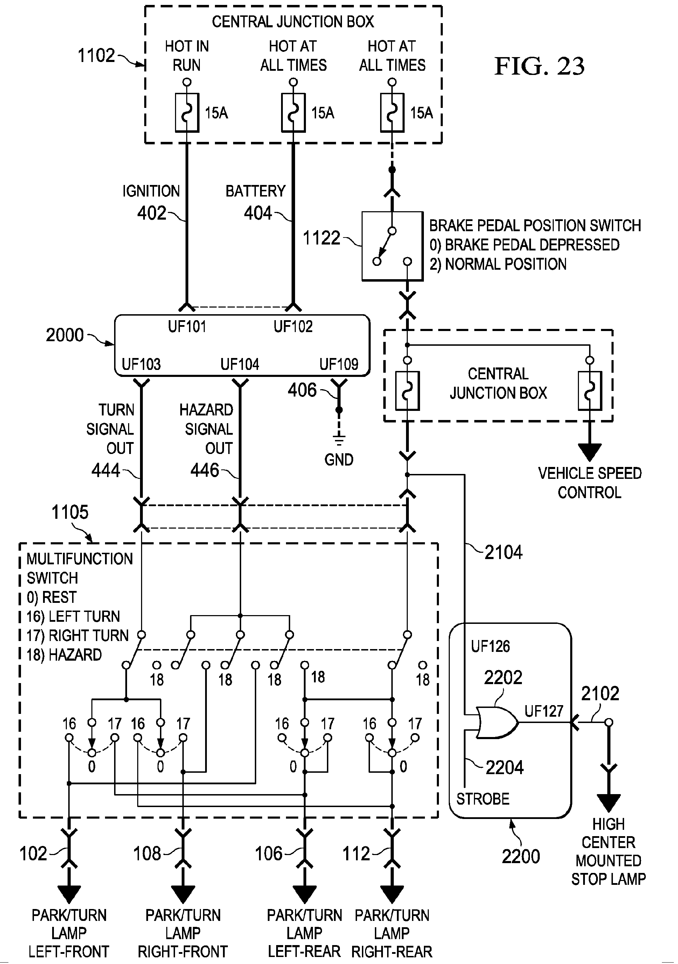

Referring now to Figure 23, a wiring diagram of the strobe module **2000** installed into a five-pin flasher system and additionally controlling a high center mounted stop lamp (HCMSL) as a multi-purpose auxiliary lamp is shown. It should be understood that the HCMSL is only one option for a multi-purpose auxiliary lamp and the strobe module **2000** is capable of utilizing additional or different multi-purpose auxiliary lamps or lights associated with the vehicle into which the strobe module **2000** is installed. The five-pin flasher system before modification with the strobe module **2000** can be seen back in FIG. 11. The five-pin flasher system including modification with the strobe module **300,** that did not include auxiliary light control, can be seen in FIG. 12.

Except where otherwise indicated, the strobe module **2000** integrates with the five-pin system similarly to the manner in which the strobe module **300** does. In the case of the strobe module **2000** having auxiliary multi-purpose light controls, the auxiliary light input **2104** of the OR circuit **2200** is connected to the power lead or signal that would normally feed to the HCMSL. An internal strobe signal **2204** feeds into the logical OR gate **2202** along with the input **2104.** If either of these inputs **2104, 2204** are active, the gate **2202** provides a signal or power on the multi-purpose auxiliary output **2102** resulting in illumination of the HCMSL.

From the described arrangement, it should be understood that the application of the brake pedal in the vehicle in which the strobe module **2000** is installed will always result in steady illumination of the HCMSL as a user would expect. Only if the HCMSL is not otherwise activated by the vehicle will the strobe module **2000** be able to activate the same. In this way, function of any auxiliary lamp or light is only enhanced by the strobe module **2000.** The HCMSL or any other auxiliary multi-purpose lamp to which the strobe module **2000** is connected may be strobe activated along with the existing hazard flasher lights. In cases where the hazard lights are strobed in groups (e.g., left to right or right to left) the auxiliary multi-purpose lamp may be strobed along with one of these groups, or may be strobed as its own groups (e.g., left, center, then right strobe, or vice versa). In some embodiments the connected auxiliary multi-purpose lamps may be strobed alone. It should be appreciated that all of these functions may be controlled by the vehicle's existing hazard switch (e.g., hazard switch **206** of FIG. 2). The functions may be activated by sequential presses or activations of the switch **206** such that additional controls or switchgear are not required to be installed in the user's vehicle. However, in cases where a user desires multiple controls or switches, the same could be installed and accommodated by the strobe module (300 or 2000) but at the expense of interior vehicle modifications that may not be desirable.

In some embodiments, the strobe module 2000 is activated solely by the switch 260 but may be controlled via Bluetooth or another wireless protocol. The wireless module 316 may be used to allow a user to set or select a particular strobe pattern or protocol. For example, with a single press of the switch 216 the traditional hazard flashers may be activated. Using wireless communication, the user might select that the HCMSL should be strobed while the existing hazard lights are flashed. The user might also select that all connected lights should strobe, or that a left to right or right to left pattern should be implemented. It should be understood that not only a HCMSL, but any auxiliary light might be employed in a similar manner by the strobe module 2000.

The strobe module **2000** can be integrated into any type of existing hazard flasher system in a similar manner as the strobe module 300 previously described. Further, in any system where deployment of an auxiliary or auxiliary multi-purpose lamp or light is desired (or a plurality of these), the same may be wired an implemented as shown in FIG. 23, for example. Once the strobe module **2000** is installed into the existing vehicle system as described herein, the multi-purpose auxiliary lights may be integrated by connecting the existing output from the existing vehicles system to these lights to the auxiliary input **2104** associated with the strobe module **2000** and the lights themselves connected to the output **2102.** In this way, the original function of the respective auxiliary light is retained while it is also employed as part of the strobing function of the strobe module **2000.**

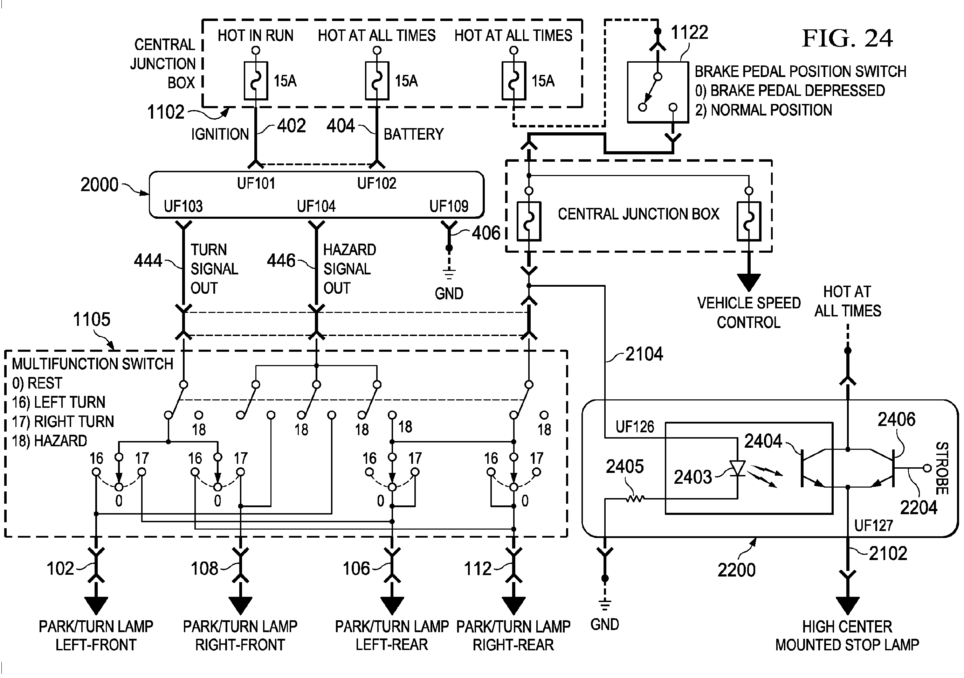

Referring now to Figure 24, a wiring and schematic diagram illustrating further implementation options for the strobe module **2000** of an embodiment of the present invention installed into a five-pin flasher system and additionally controlling an HCMSL. However, the HCMSL is exemplary only and the multi-purpose auxiliary lighting that may be connected as shown in FIG. 24 is not limited to an HCMSL. FIG. 24 represents one option for isolating and protecting the function of the HCMSL (or other multi-purpose auxiliary light) while incorporating the same into the strobing functions of the strobe module **2000.** The OR circuit **2200** (which may be integrated physically with the rest of the strobe module **2000** or may be physically separate as needed) provides the auxiliary input **2104** for taking the output that would otherwise go directly to the HCMSL or other multi-purpose auxiliary light. As a part of the OR circuit **2200,** this input **2104** feeds into an optoisolator **2402.** The connection from the input **2104** feeds to a light emitting diode (LED) **2403** internal to the optoisolator **2402.** If necessary, the LED **2403** may be grounded through a resistor **2405.** When the input **2104** becomes active or energized the LED produces photons which are detected by a paired phototransistor **2104.** When the phototransistor **2104** is activated by the LED **2403,** current and voltage are provided at the output **2102** to power the HCMSL or other auxiliary lighting device. The voltage and current to power the output **2102** may be provided through the power supply module **310,** or from a separate full time or ignition switched connection to vehicle power.

In parallel with the phototransistor **2404** is a second transistor **2406** which may be activated to allow current flow by the internal circuitry of the strobe module **2000** (e.g., it may be controlled directly via the microcontroller **302).** Internally this may be denoted as strobe signal **2204.**

It should be appreciated that the OR circuit **2200** as shown in FIG. 24 allows for the original function of the HCMSL or other multi-purpose auxiliary light to be achieved via the optoisolator **2402** (whether a flash, steady state, or other) while the same device can be activated by the strobe module **2000.** Naturally, as long as either the existing vehicle systems or the strobe module **2000** activate the HCMSL or other multi-purpose auxiliary light, the same will illuminate. It should also be appreciated that a steady state illumination by the vehicle systems will override any strobe or any intermittent activation on the part of the strobe module **2000.** Thus existing vehicle functions of the HCMSL or other multi-purpose auxiliary light or not coopted, but only enhanced.

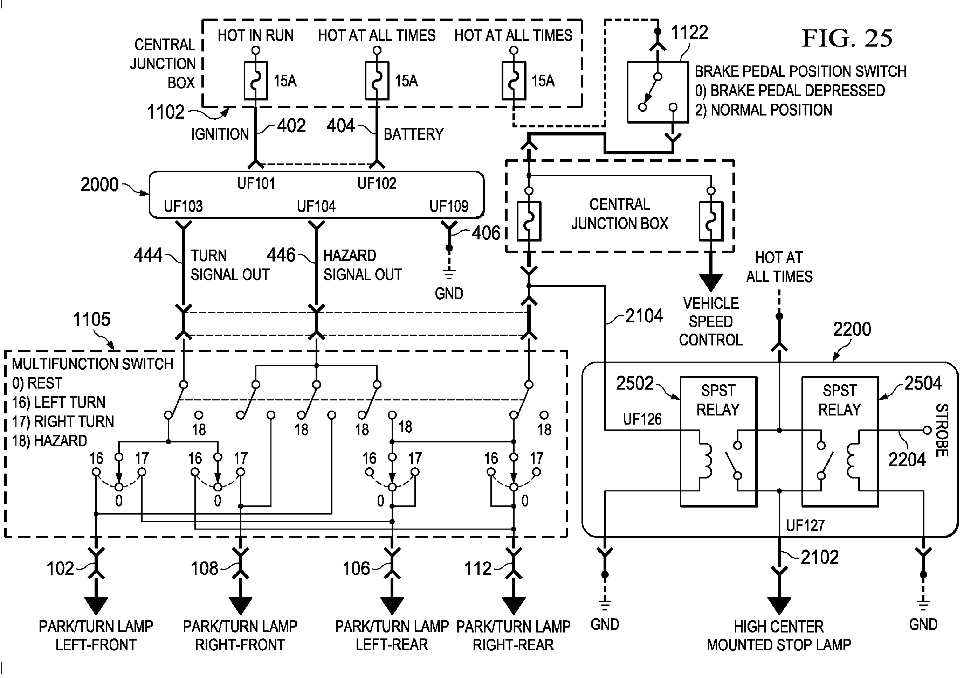

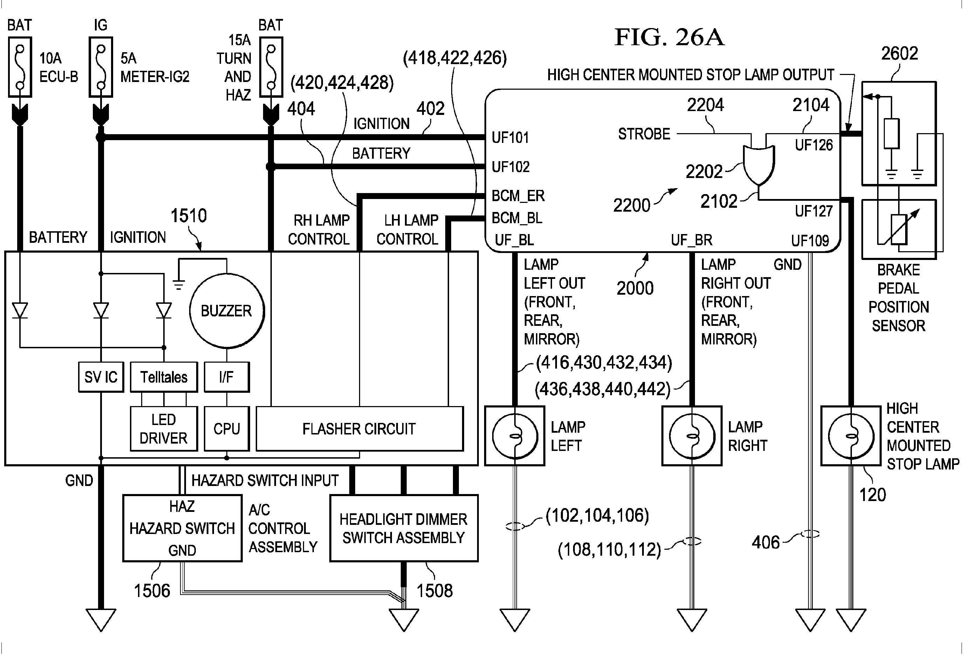

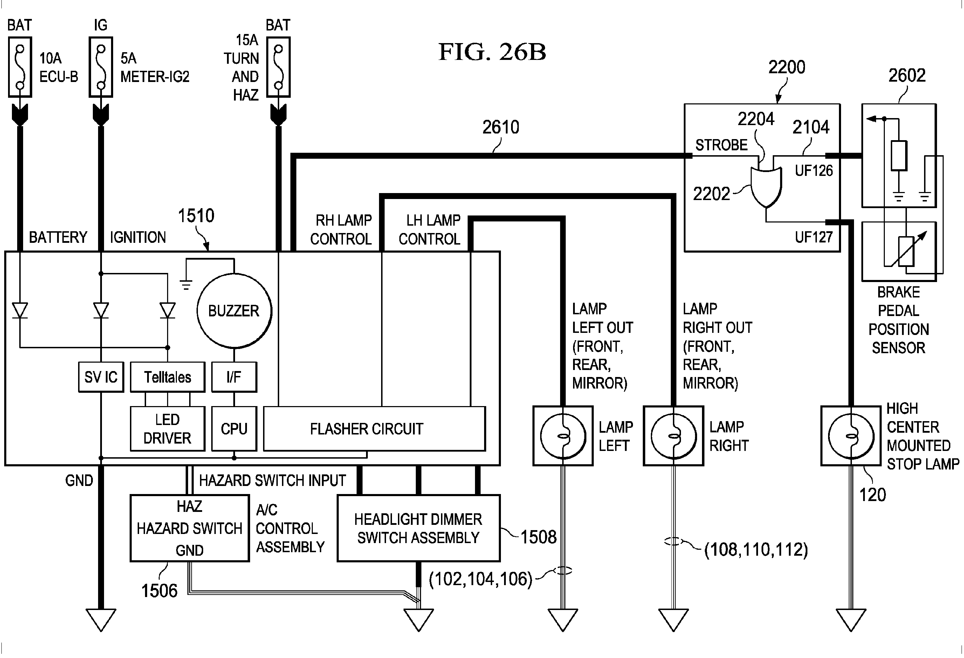

Referring now to Figure 25, another wiring and schematic diagram illustrating further implementation options for a strobe module **2000** of an embodiment of the present invention installed into a five-pin flasher system and additionally controlling a high center mounted stop lamp is shown. Here the OR circuit **2200** comprises a pair of single pole, single throw (SPST) relays **2502** and **2504.** The relay **2502** accepts the input **2104** and, upon activation of the same by the vehicle, closes to supply power and voltage to the HCMSL or other auxiliary light on output **2102.** Similarly, relay **2504** closes upon input from the strobe signal **2204.** It can be appreciated that if either relay **2502, 2504** closes as a result of activation of input **2104** or strobe signal **2204,** respectively, the output **2102** becomes energized. Thus the system functions substantially similar to that of FIG. 24. Referring now to Figure 26A a wiring diagram illustrating the strobe module **2000** installed with a BCM flasher system and controlling an HCMSL is shown. The system of FIG. 26A is shown prior to modification in FIG. 15 above. It is also shown after installation of the strobe module **300** (without HCMSL or other auxiliary control) in FIG. 16A. Here in FIG. 26A it can be seen that the strobe module **2000** may be installed into a BCM based system in a substantially similar manner as the system **300** with respect to existing hazard lights. The strobe module **2000** is shown in FIG. 26 with additional control over an HCMSL **120.** As with previous embodiments, the HCMSL is exemplary of a multi-purpose auxiliary light but other multi-purpose auxiliary lights may be connected in a similar fashion for inclusion with the strobe functions of the strobe module **2000.**

Here, the existing output to the HCMSL **120** is shown as output **2604** from a brake light activation circuit **2602** activated by a driver or vehicle occupant pressing the brake pedal. This output now becomes input to brake signal input **2104** feeding into the OR circuit **2200** or the strobe module **2000.** It should be understood that whether the BCM itself controls the HCMSL **120** or whether it is controlled by a separate system or circuit of the automobile (e.g., brake light activation circuit **2602),** the strobe module **2000** accepts the vehicle's normal output to the HCMSL **120** into input **2104.** As previously described the OR circuit **2200** (which may be internal or external to the rest of the strobe module **2000)** activates output **2102** in response to either an internal strobe signal (e.g., from the microcontroller **1602)** or activation of the input **2104.** Thus, as shown, the strobe module **2000** has functional control over all lights or lamps existing in the vehicle's signal light or hazard light circuit as well as the HCMSL **120** or other multi-purpose auxiliary lights. Thus the strobe module **2000** can provide strobing functionality as described herein on a BCM controlled automobile setup including both signal or hazard lights as well as the HCMSL and/or other auxiliary or multi-purpose auxiliary lights. Any multi-purpose auxiliary lights will retain their original function (whether as a brake light or otherwise) as well as partake in strobing functionality when they are not otherwise deployed.

Figure 26B is a wiring diagram showing an embodiment of a strobe module having multi-purpose auxiliary light control capabilities installed into a BCM controlled flasher system via modification of a microcontroller. Similar to the embodiment shown in FIG. 16A, modifications to the existing functions of the BCM **1510** may be accomplished by an auxiliary chip **1604** that may contain memory and instructions for proper timing of the hazard lights (e.g., a strobe effect or effects). Again, such an auxiliary chip **1604** may be wired directly to the BCM **1510** or microcontroller **1602** or may communicate via a bus (not shown) such as a CAN bus. In order to integrate one or more multi-purpose auxiliary lights into a strobing program, one of the outputs from the BCM **1510** that provides a strobing output must be connected to such multi-purpose auxiliary light. Such a multi-purpose auxiliary light might be fed by one of the now strobe capable outputs to the existing vehicle flashers (e.g., one or more of **102, 104, 106,** 102, **110,** or **112).**

On the other hand, in some embodiments, a separate strobe capable output **2610** from the BCM **1510** may feed into OR circuit **2200** to the strobe signal lead **2204.** Output **2604** from brake activation circuit **2602** is connected to brake signal input **2104.** In this manner, strobe activation may be controlled entirely by the BCM **1510** and one or more multi-purpose auxiliary lights, such as the HCMSL **120,** may be integrated into the strobe functions while retaining its original function as well.

In another embodiment, additional chips or memories are not needed as the BCM **1510** contains all of the necessary logic and timing information to drive the vehicle lights (including the new output **2610)** in a strobing fashion in response to inputs from the hazard switch and/or signal stalk. It should be appreciated that where the BCM **1510** can be made to control the strobing functions directly (either via auxiliary chip **1604** or by original programming or coding of a microcontroller), a separate OR circuit **2200** or may still be necessary to allow the multi-purpose auxiliary lights to be made a part of the strobing functions without loss of their original function. In cases of control of multi-purpose auxiliary lights exclusively by the BCM **1510** (e.g., where separate function of the auxiliary light is not needed or intended to be shared with another circuit such as a brake light circuit) all functionality might be achieved exclusively by programming, reprogramming, or augmented the logic on board the BCM **1510.**

It is to be understood that the terms "including", "comprising", "consisting" and grammatical variants thereof do not preclude the addition of one or more components, features, steps, or integers or groups thereof and that the terms are to be construed as specifying components, features, steps or integers.

If the specification or claims refer to "an additional" element, that does not preclude there being more than one of the additional element.

It is to be understood that where the claims or specification refer to "a" or "an" element, such reference is not be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

For purposes of the instant disclosure, the term "at least" followed by a number is used herein to denote the start of a range beginning with that number (which may be a ranger having an upper limit or no upper limit, depending on the variable being defined). For example, "at least 1" means 1 or more than 1. The term "at most" followed by a number is used herein to denote the end of a range ending with that number (which may be a range having 1 or 0 as its lower limit, or a range having no lower limit, depending upon the variable being defined). For example, "at most 4" means 4 or less than 4, and "at most 40%" means 40% or less than 40%. Terms of approximation (e.g., "about", "substantially", "approximately", etc.) should be interpreted according to their ordinary and customary meanings as used in the associated art unless indicated otherwise. Absent a specific definition and absent ordinary and customary usage in the associated art, such terms should be interpreted to be ± 10% of the base value.

When, in this document, a range is given as "(a first number) to (a second number)" or "(a first number) - (a second number)", this means a range whose lower limit is the first number and whose upper limit is the second number. For example, 25 to 100 should be interpreted to mean a range whose lower limit is 25 and whose upper limit is 100. Additionally, it should be noted that where a range is given, every possible subrange or interval within that range is also specifically intended unless the context indicates to the contrary. For example, if the specification indicates a range of 25 to 100 such range is also intended to include subranges such as 26-100, 27-100, etc., 25-99, 25-98, etc., as well as any other possible combination of lower and upper values within the stated range, e.g., 33-47, 60-97, 41-45, 28-96, etc. Note that integer range values have been used in this paragraph for purposes of illustration only and decimal and fractional values (e.g., 46.7 - 91.3) should also be understood to be intended as possible subrange endpoints unless specifically excluded.

It should be noted that where reference is made herein to a method comprising of two or more defined steps, the defined steps can be carried out in any order or simultaneously (except where context excludes that possibility), and the method can also include one or more other steps which are carried out before any of the defined steps, between two of the defined steps, or after all of the defined steps (except where context excludes that possibility).

Thus, the present invention is well adapted to carry out the objectives and attain the ends and advantages mentioned above as well as those inherent therein. While presently preferred embodiments have been described for purposes of this disclosure, numerous changes and modifications will be apparent to those of ordinary skill in the art. Such changes and modifications are encompassed within the scope of this invention as defined by the claims.

## Claims

1. A system for implementing emergency strobing of existing vehicle lights comprising:
an interface to a vehicle wiring harness configured to receive input to an existing vehicle flasher module;
a strobing circuit (300) that responds to an activation signal from the vehicle wiring harness that is indicative of a hazard flasher deployment event by producing an electrical output having a strobing pattern having a repeating flash pattern comprising a portion having a cycle rate that is perceptibly faster than a turn signal light cycle rate of existing vehicle turn signal lights (102, 106, 108, 112); and
an OR circuit (2200) having two inputs, one (2204) of which accepts the electrical output from the strobing circuit and another (UF126) of which intercepts output to an existing auxiliary vehicle lamp (120) that is not otherwise activated with existing vehicle flashers or turn signal lights;
wherein the OR circuit has a multifunction output for connection to the existing auxiliary vehicle lamp in place of the intercepted output, the multifunction output providing for lighting of the existing auxiliary vehicle lamp with the strobing pattern when the output from the strobing circuit is active or with the output from the intercepted output when the intercepted output is active.

2. The system of claim 1, wherein the strobing circuit controls a plurality of existing vehicle hazard lights through the vehicle wiring harness to provide illumination of the existing vehicle hazard lights in the strobing pattern in response to the activation signal from the vehicle wiring harness that is indicative of hazard flasher deployment.

3. The system of claim 2:
wherein the strobing circuit accepts the activation signal, which would otherwise be input to the existing vehicle flasher module to activate a non-strobing hazard flasher deployment of the existing vehicle hazard lamps; and
wherein the strobing circuit produces the electrical output to create the strobing pattern of the existing vehicle hazard lamps in place of what would otherwise be output by the existing vehicle flasher module to the existing vehicle hazard lamps producing the non-strobing hazard flashing of the existing vehicle lamps.

4. The system of claim 3, wherein the strobing circuit provides a plurality of different strobing effects, the plurality of strobing effects being selected by subsequent activation signals indicative of subsequent hazard flasher deployment.

5. The system of claim 4, wherein at least one of the plurality of strobing effects indicates a directional signal by strobing existing vehicle lamps on one of the left or right side of the vehicle before those of the other side, with the multifunction output strobing therebetween.

6. The system of claim 1, wherein the OR circuit connects to a high center mounted stop lamp (120) as the auxiliary vehicle lamp.

7. The system of claim 1, wherein the OR circuit connects to an output from a brake light circuit (2602) as the intercepted output.

## Patentansprüche

1. System zum Implementieren eines stroboskopischen Notfall-Blinkens bei bestehenden Fahrzeugleuchten, umfassend:
eine Schnittstelle zu einem Fahrzeugkabelbaum, die so konfiguriert ist, dass sie einen Eingang zu einem bestehenden Fahrzeugblinkermodul empfängt;
eine Stroboskopschaltung (300), die auf ein Aktivierungssignal vom Fahrzeugkabelbaum, das auf ein Einsatzereignis des Warnblinkers hinweist, durch Erzeugen eines elektrischen Ausgangs reagiert, der ein Stroboskopmuster aufweist, welches ein sich wiederholendes Blinkmuster aufweist, das einen Abschnitt umfasst, der eine Zyklusrate aufweist, die wahrnehmbar schneller ist als eine Zyklusrate einer Abbiegesignalleuchte bestehender Fahrzeug-Abbiegesignalleuchten (102, 106, 108, 112); und
eine ODER-Schaltung (2200), die zwei Eingänge aufweist, von denen einer (2204) den elektrischen Ausgang von der Stroboskopschaltung annimmt und ein anderer (UF126) einen Ausgang zu einer bestehenden zusätzlichen Fahrzeuglampe (120), die sonst nicht zusammen mit bestehenden Fahrzeugblinkern oder Abbiegesignalleuchten aktiviert wird, abfängt;
wobei die ODER-Schaltung einen Multifunktionsausgang zur Verbindung mit der bestehenden zusätzlichen Fahrzeuglampe anstelle des abgefangenen Ausgangs aufweist, wobei der Multifunktionsausgang für das Aufleuchten der bestehenden zusätzlichen Fahrzeuglampe mit dem Stroboskopmuster, wenn der Ausgang von der Stroboskopschaltung aktiv ist, oder mit dem Ausgang vom abgefangenen Ausgang sorgt, wenn der abgefangene Ausgang aktiv ist.

2. System nach Anspruch 1, wobei die Stroboskopschaltung eine Vielzahl von bestehenden Fahrzeugwarnleuchten durch den Fahrzeugkabelbaum steuert, um als Reaktion auf das Aktivierungssignal vom Fahrzeugkabelbaum, das auf einen Einsatz des Warnblinkers hinweist, Beleuchtung der bestehenden Fahrzeugwarnleuchten im Stroboskopmuster bereitzustellen.

3. System nach Anspruch 2:
wobei die Stroboskopschaltung das Aktivierungssignal annimmt, das sonst in das bestehende Fahrzeugblinkermodul eingegeben würde, um den Einsatz eines Warnblinkers der bestehenden Fahrzeugwarnlampen ohne stroboskopisches Blinken zu aktivieren; und
wobei die Stroboskopschaltung den elektrischen Ausgang erzeugt, um das Stroboskopmuster der bestehenden Fahrzeugwarnlampen anstelle dessen zu erzeugen, was sonst vom bestehenden Fahrzeugblinkermodul an die bestehenden Fahrzeugwarnlampen, die das Warnblinken der bestehenden Fahrzeuglampen ohne stroboskopisches Blinken erzeugen, ausgegeben würde.

4. System nach Anspruch 3, wobei die Stroboskopschaltung eine Vielzahl von unterschiedlichen Stroboskopeffekten bereitstellt, wobei die Vielzahl von Stroboskopeffekten durch anschließende Aktivierungssignale ausgewählt wird, die auf den anschließenden Einsatz des Warnblinkers hinweisen.

5. System nach Anspruch 4, wobei mindestens einer der Vielzahl von Stroboskopeffekten auf ein Richtungssignal durch stroboskopisches Blinken bestehender Fahrzeuglampen auf einer der linken oder der rechten Seite des Fahrzeugs vor denen auf der anderen Seite hinweist, wobei dazwischen der Multifunktionsausgang stroboskopisch blinkt.

6. System nach Anspruch 1, wobei die ODER-Schaltung mit einer oben in der Mitte angebrachten Bremslampe (120) als zusätzliche Fahrzeuglampe verbunden ist.

7. System nach Anspruch 1, wobei die ODER-Schaltung mit einem Ausgang von einer Bremsleuchtenschaltung (2602) als abgefangenen Ausgang verbunden ist.

## Revendications

1. Système de mise en oeuvre de balayage stroboscopique d'urgence de feux de véhicule existants comprenant :
une interface à un faisceau de câblage de véhicule configuré pour recevoir une entrée dans un module de clignotant de véhicule existant ;
un circuit de balayage stroboscopique (300) qui répond à un signal d'activation provenant du faisceau de câblage de véhicule qui indique un événement de déploiement de feux de détresse en produisant une sortie électrique présentant un motif stroboscopique présentant un motif de clignotement répétitif comprenant une partie présentant une cadence de cycle qui est perceptiblement plus rapide qu'une cadence de cycle de clignotant de clignotants de véhicule existants (102, 106, 108, 112) ; et
un circuit OU (2200) présentant deux entrées, dont une (2204) accepte la sortie électrique provenant du circuit de balayage stroboscopique et l'autre (UF126) intercepte la sortie vers un feu auxiliaire de véhicule existant (120) qui n'est pas autrement activé avec des feux de détresse ou clignotants de véhicule existants ;
dans lequel le circuit OU présente une sortie multifonction pour une connexion au feu auxiliaire de véhicule existant à la place de la sortie interceptée, la sortie multifonction assurant l'éclairage du feu auxiliaire de véhicule existant avec le motif stroboscopique lorsque la sortie provenant du circuit de balayage stroboscopique est active ou avec la sortie de la sortie interceptée lorsque la sortie interceptée est active.

2. Système selon la revendication 1, dans lequel le circuit de balayage stroboscopique commande une pluralité de feux de détresse de véhicule existants par le biais du faisceau de câblage de véhicule pour assurer un éclairage des feux de détresse de véhicule existants selon un motif stroboscopique en réponse au signal d'activation provenant du faisceau de câblage de véhicule qui indique un déploiement de feux de détresse clignotants.

3. Système selon la revendication 2 :
dans lequel le circuit de balayage stroboscopique accepte le signal d'activation qui serait autrement entré dans le module de clignotant de véhicule existant pour activer un déploiement de feux de détresse clignotants non-stroboscopiques des feux de détresse de véhicule existants ; et
dans lequel le circuit de balayage stroboscopique produit la sortie électrique pour créer le motif stroboscopique des feux de détresse de véhicule existants à la place de ce qui serait autrement produit en sortie par le module de clignotant de véhicule existant sur les feux de détresse de véhicule existants produisant le clignotement de détresse non-stroboscopique des feux de véhicule existants.

4. Système selon la revendication 3, dans lequel le circuit de balayage stroboscopique fournit une pluralité d'effets stroboscopiques différents, la pluralité d'effets stroboscopiques étant sélectionnée par des signaux d'activation ultérieurs indiquant le déploiement ultérieur de feux de détresse clignotants.

5. Système selon la revendication 4, dans lequel au moins un de la pluralité d'effets stroboscopiques indique un signal directionnel en faisant clignoter stroboscopiquement des feux de véhicule existants sur l'un des côtés gauche ou droit du véhicule avant ceux de l'autre côté, avec le balayage stroboscopique de sortie multifonction entre eux.

6. Système selon la revendication 1, dans lequel le circuit OU est connecté à un feu stop (120) monté en hauteur au centre en tant que feu auxiliaire de véhicule.

7. Système selon la revendication 1, dans lequel le circuit OU est connecté à une sortie d'un circuit de feu stop (2602) en tant que sortie interceptée.
